# EUROPEAN PATENT SPECIFICATION

(11) **EP 3 698 751 B1**
(45) Date of publication and mention of the grant of the patent: **17.04.2024**
(21) Application number: 20157665.9
(22) Date of filing: 17.02.2020
(51) Int. Cl.: A61C 13/00, A61C 13/01, A61C 13/36

(54) **PLATE DENTURE MANUFACTURING METHOD, DENTURE MOLD, AND PLATE DENTURE MANUFACTURING KIT**
PLATTENZAHNPROTHESENHERSTELLUNGSVERFAHREN, ZAHNPROTHESENFORM UND PLATTENZAHNPROTHESENHERSTELLUNGSKIT
PROCÉDÉ DE FABRICATION D'UN APPAREIL DENTAIRE, MOULE D'APPAREIL DENTAIRE ET KIT DE FABRICATION D'UN APPAREIL DENTAIRE

(30) Priority: 19.02.2019 JP 2019027387
(43) Date of publication of application: 26.08.2020
(73) Proprietor: DGSHAPE Corporation, Hamamatsu-shi, Shizuoka 431-2103 (JP)
(72) Inventor: SAITO, Koji, Hamamatsu-shi, Shizuoka 431-2103 (JP); ISOBE, Sachino, Hamamatsu-shi, Shizuoka 431-2103 (JP)
(74) Representative: Grünecker Patent- und Rechtsanwälte PartG mbB

(56) References cited:
- EP-A1- 2 915 503
- EP-A1- 3 517 073
- DE-U1-202010 001 125
- US-A1- 2016 157 972
- US-A1- 2018 042 705

## Description

### BACKGROUND OF THE INVENTION

### 1. Field of the Invention

The present invention relates to plate denture manufacturing methods, denture molds, and plate denture manufacturing kits.

### 2. Description of the Related Art

To replace missing teeth of patients, plate dentures have conventionally been used. Fabrication of plate dentures first involves, for example, cutting materials (such as dental resin materials) into desired shapes so as to make denture bases, and then bonding separately prepared artificial teeth to the denture bases. With the introduction of computer-aided design (CAD) and computer-aided manufacturing (CAM) techniques in recent years, denture bases are now being mechanically fabricated using cutting apparatuses in accordance with computer-designed cutting data. US 2016/157972 A1 discloses a dental transfer template arrangement, with a transfer template and a prosthesis base which in particular are both produced by the same CAD/CAM device, wherein both have a large number of recesses for teeth, wherein incisor and/or occlusal areas fit into the recesses of the transfer template and cervical areas of teeth fit into the recesses of the prosthesis base, wherein the teeth are each to be adhesively bonded in the recesses of the prosthesis base. The content of EP 3 517 073 A1 is state of the art pursuant to Article 54(3) EPC. US 2018/0427705 A1 discloses a method of fabricating a denture, comprising milling a preliminary try-in denture from denture material comprising a layer of denture base material contiguous with a layer of denture tooth material. Denture base material is removed from the block to form a first part of the, labial, buccal, gingival, and flange regions of the denture base to form a preliminary denture. A preliminary mold is created from this preliminary denture. The preliminary denture is then further modified with deformable waxes in gingival and anterior tooth recesses to form a preliminary try-in denture, which is fitted to a patient and adjusted to optimal dimensions. The adjusted try-in denture is then reproduced by further molding methods, producing the final denture. EP 2 915 503 A1 discloses a method for manufacturing a layered denture comprising: machining a material blank, the blank comprising an enamel material, wherein said machining forms a first cavity in the material blank and wherein said first cavity comprises a first tooth boundary and an aft cavity; filling a first denture material in to the first cavity wherein the first denture material covers the first tooth boundary and extends into the aft cavity; machining the first denture material wherein said machining forms a second cavity in at least one of the material blank and the first denture material; filling a second denture material into the second cavity; and machining the second denture material wherein the machining forms a base pocket in the second denture material. Products produced by the method are likewise disclosed.

### SUMMARY OF THE INVENTION

In general, the process of bonding artificial teeth to denture bases is still manually performed by dental technicians. In other words, dental technicians usually bond artificial teeth to denture bases one at a time in a step-by-step manner using adhesives or polymerizable materials. The process of bonding artificial teeth to denture bases one at a time, however, requires considerable time and effort when the number of artificial teeth to be bonded is large (e.g., when making a complete denture). Dental technicians need to perform positioning of artificial teeth with respect to opposing teeth in bonding the artificial teeth. This requires sophisticated skills, imposing immense burdens on the dental technicians. The resulting plate dentures may thus vary in quality depending on the skills of the dental technicians.

Accordingly, embodiments of the present invention provide a manufacturing method that reduces work burdens on dental technicians and facilitates fabrication of plate dentures.

An embodiment of the present invention provides a method for manufacturing a plate denture including a denture base and an artificial tooth placed on the denture base. The manufacturing method includes a three-dimensional data preparing step, a denture mold preparing step, a denture mold cutting step, an artificial tooth placing step, and a denture base material curing step. The three-dimensional data preparing step involves preparing three-dimensional data for an artificial tooth impression that is an impression for the artificial tooth to be placed on the denture base. The denture mold preparing step involves preparing a denture mold including a retained portion to be directly or indirectly attached to a cutting apparatus, and a machinable surface to be cut by the cutting apparatus. The denture mold cutting step involves directly or indirectly attaching the denture mold to the cutting apparatus through the retained portion, and cutting the machinable surface of the denture mold so as to define a placement groove for the artificial tooth in accordance with the three-dimensional data for the artificial tooth impression. The artificial tooth placing step involves placing the artificial tooth in the placement groove. The denture base material curing step involves pouring a denture base material into the denture mold, with the artificial tooth placed in the placement groove, and curing the denture base material so as to fabricate a one-piece product including the denture mold, the artificial tooth, and a cured product of the denture base material that are integral with each other.

The manufacturing method disclosed herein involves defining the placement groove in the denture mold using the cutting apparatus in accordance with the three-dimensional data for the artificial tooth impression. This enables a dental technician to perform positioning of the artificial tooth with respect to an opposing tooth just by placing the artificial tooth in the placement groove. Thus, if the dental technician is inexperienced, he or she would be able to place the artificial tooth at a proper position. The manufacturing method disclosed herein involves pouring the denture base material into the denture mold, with the artificial tooth placed in the placement groove, so as to make the denture base material cured product and the artificial tooth integral with each other. Accordingly, if the plate denture includes artificial teeth, the dental technician would be able to make the artificial teeth integral with the denture base material cured product at once. This makes it unnecessary to bond the artificial teeth to the denture base one by one. The manufacturing method disclosed herein thus reduces the time and effort required for bonding of the artificial teeth, resulting in an increase in efficiency. The manufacturing method disclosed herein also reduces the work burden on the dental technician and facilitates fabrication of the plate denture. Consequently, the quality of the plate denture is unlikely to depend on the skill of the dental technician, enabling fabrication of the plate denture stable in quality.

Another embodiment of the present invention provides a combination of a denture mold, a denture base material and an artificial tooth, for use in manufacture of a plate denture including a denture base and the artificial tooth placed on the denture base. The denture mold includes a retained portion and a machinable surface. The retained portion is to be directly or indirectly attached to a cutting apparatus. The machinable surface has been cut by the cutting apparatus such that a placement groove into which the artificial tooth is to be fitted is defined. The denture mold also includes a forming space which is formed by the machinable surface and a side wall extending upward from the machinable surface and into which the denture base material is poured

The use of the denture mold disclosed herein enables the dental technician to easily and efficiently fabricate the plate denture. The use of the denture mold disclosed herein enables fabrication of the plate denture stable in quality.

Various embodiments of the present invention provide a manufacturing method, a denture mold, and a plate denture manufacturing kit that reduce work burdens on dental technicians and facilitate fabrication of plate dentures.

### BRIEF DESCRIPTION OF THE DRAWINGS

FIG. 1 is a perspective view of a plate denture according to an embodiment of the present invention.
FIG. 2 is a flow chart illustrating a plate denture manufacturing method according to the embodiment of the present invention.
FIG. 3 illustrates standard triangulated language (STL) data for the plate denture according to the embodiment of the present invention.
FIG. 4 illustrates STL data for an artificial tooth impression according to the embodiment of the present invention.
FIG. 5 is a top view of a denture mold according to the embodiment of the present invention.
FIG. 6 is a bottom view of the denture mold according to the embodiment of the present invention.
FIG. 7 is a plan view of an adapter according to the embodiment of the present invention.
FIG. 8 is a plan view of a body of the adapter.
FIG. 9 is a plan view of the body of the adapter and the denture mold retained by the body.
FIG. 10 is a plan view of a retaining plate of the adapter.
FIG. 11 is a front view of a cutting apparatus according to the embodiment of the present invention.
FIG. 12 is a perspective view of a tool magazine.
FIG. 13 is a perspective view of a rotary support and a clamp.
FIG. 14 is a block diagram of a controller.
FIG. 15 is a plan view of the denture mold, portions of which are cut such that an artificial tooth impression is formed.
FIG. 16 is a plan view of the denture mold on which artificial teeth are placed.
FIG. 17 is a plan view of a one-piece product.
FIG. 18 is a plan view of a cut product.

### DETAILED DESCRIPTION OF THE PREFERRED EMBODIMENTS

Plate denture manufacturing methods, denture molds, and plate denture manufacturing kits according to embodiments of the present invention will be described below with reference to the drawings. The embodiments described below are naturally not intended to limit the present invention in any way. Components or elements having the same functions are identified by the same reference signs, and description thereof will be omitted or simplified when redundant. The reference signs F, Rr, R, L, U, and D in the drawings respectively represent front, rear, right, left, up, and down. These directions are defined for the sake of convenience of description and do not limit the present invention in any way.

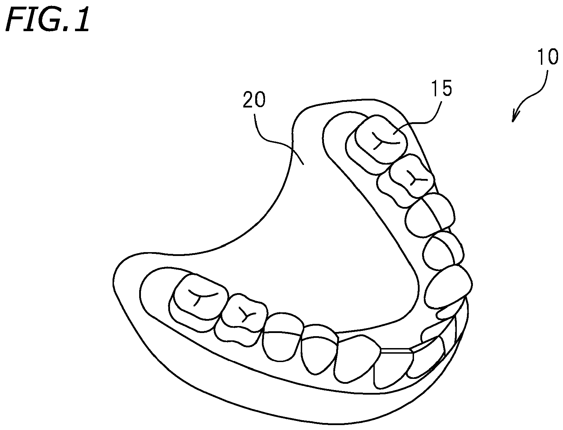

FIG. 1 is a perspective view of a plate denture 10. The plate denture 10 is a complete denture (or full denture) for the upper jaw. The plate denture 10 includes a denture base 20 and artificial teeth 15 bonded to the denture base 20. FIG. 1 illustrates the plate denture 10 that is flipped over such that the artificial teeth 15 face upward, although a patient wears the plate denture 10, with the artificial teeth 15 facing downward. In the present embodiment, the number of artificial teeth 15 is 14 in total. The artificial teeth 15 are made of, for example, any of various materials, such as polymethyl methacrylate (PMMA) resin, zirconia, glass ceramics, glass fiber, polyether ether ketone (PEEK) resin, and hybrid resin. The denture base 20 is made of, for example, a denture base material, such as a dental resin material or a dental ceramic material. A procedure for manufacturing the plate denture 10 will be described below by way of example.

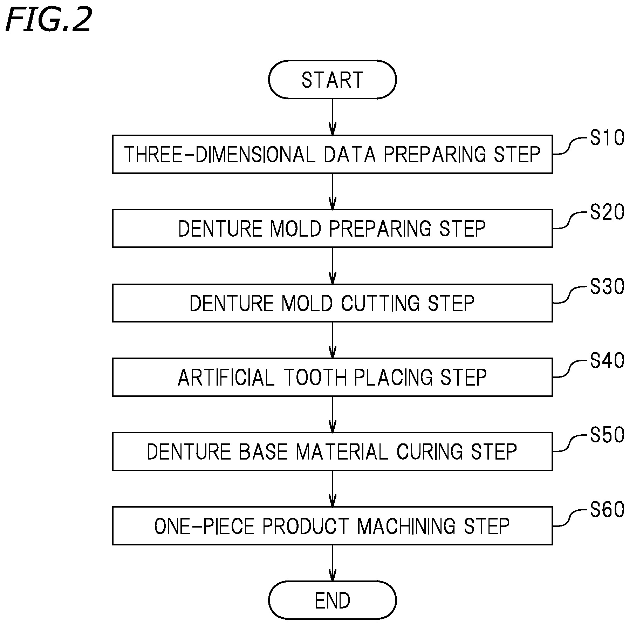

FIG. 2 is a flow chart illustrating the procedure for manufacturing the plate denture 10. The procedure illustrated in FIG. 2 is a plate denture manufacturing method according to the present embodiment and will hereinafter be referred to as a "manufacturing method". The manufacturing method according to the present embodiment includes a three-dimensional data preparing step (step S10), a denture mold preparing step (step S20), a denture mold cutting step (step S30), an artificial tooth placing step (step S40), a denture base material curing step (step S50), and a one-piece product machining step (step S60). Any other step may be performed at any time during execution of the method. The denture mold preparing step (step S20) may be performed before the three-dimensional data preparing step (step S10). The steps of the manufacturing method will be described in detail below.

First, the three-dimensional data preparing step (step S10) involves preparing at least two types of three-dimensional data. Examples of the three-dimensional data include standard triangulated language (STL) data. The three-dimensional data preparing step (step S10) includes a first STL data preparing step (sub-step S11) and a second STL data preparing step (sub-step S12). The STL data is created by, for example, a computer-aided design (CAD) device. The functions of the CAD device may be implemented by software or hardware. Examples of CAD software include a 3Shape Dental System^{™} produced by 3Shape.

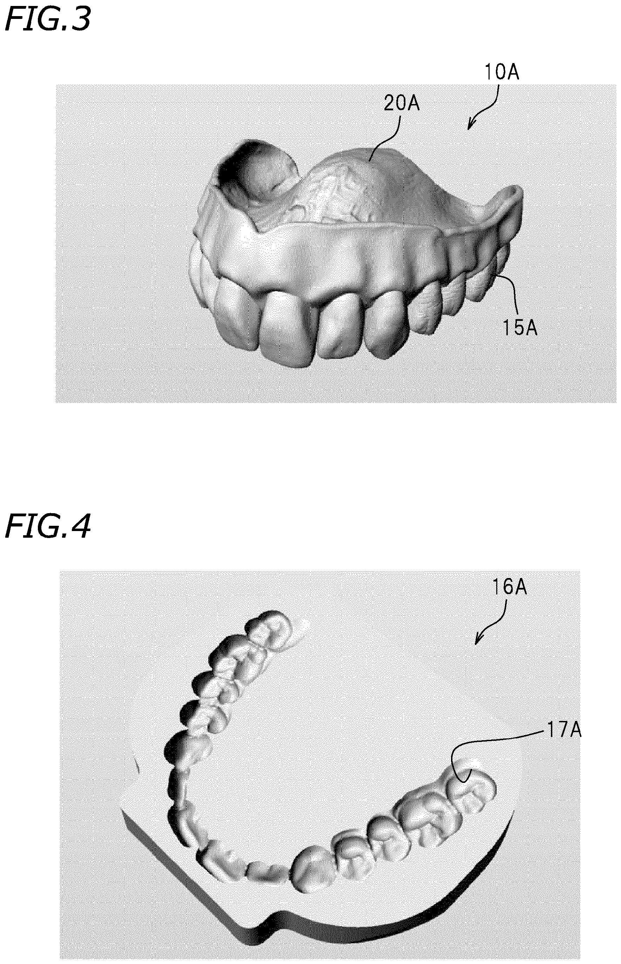

Sub-step S11 involves preparing first STL data. The first STL data is STL data 10A representing the plate denture 10 (hereinafter referred to as "STL data 10A for the plate denture 10"). The STL data 10A is also referred to as "three-dimensional data 10A". The STL data 10A for the plate denture 10 is used when a one-piece product 13 is cut in step S60 (which will be described below). FIG. 3 illustrates an example of the STL data 10A for the plate denture 10. The STL data 10A for the plate denture 10 includes STL data 20A that represents the denture base 20, and STL data 15A that represents the artificial teeth 15 placed on the denture base 20. The STL data 10A for the plate denture 10 is usually created for each patient. Depending on, for example, usage, commercially available simulated STL data for the plate denture 10 may be used on an as-is basis.

The STL data 10A for the plate denture 10 is created by following, for example, a procedure below. First, a doctor (such as a dentist) or a dental technician, for example, scans the oral cavity of a patient with a scanner, such as an intraoral scanner, so as to acquire scan data that represents the shapes of remaining teeth of the patient and alveolar ridge mucosa surrounding missing teeth of the patient. The procedure then involves creating, in accordance with the scan data acquired, the STL data 20A for the denture base 20 using CAD software. The procedure subsequently involves acquiring the STL data 15A for the artificial teeth 15 (which is, for example, commercially available STL data). The procedure then involves merging the STL data 20A for the denture base 20 and the STL data 15A for the artificial teeth 15 into the STL data 10A for the plate denture 10.

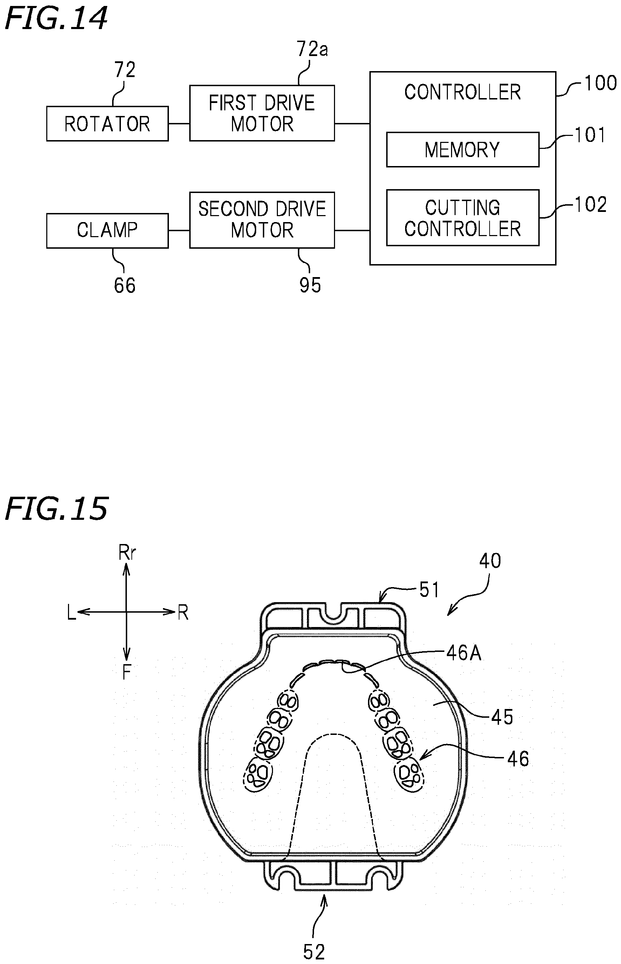

Sub-step S12 involves preparing second STL data. The second STL data is STL data 16A for an artificial tooth impression 46. The STL data 16A is also referred to as "three-dimensional data 16A". The STL data 16A for the artificial tooth impression 46 represents the alignment (or row) of the artificial teeth 15. The STL data 16A for the artificial tooth impression 46 is used when a denture mold 40 is cut in step S30 (which will be described below). In other words, the STL data 16A for the artificial tooth impression 46 is used when the artificial tooth impression 46 for placement of the artificial teeth 15 on the denture mold 40 (see FIG. 15) is formed. FIG. 4 illustrates an example of the STL data 16A for the artificial tooth impression 46. The STL data 16A for the artificial tooth impression 46 includes STL data 17A for placement grooves. The STL data 17A for the placement grooves is reflective of, for example, the sizes, locations, and orientations of the artificial teeth 15 to be placed. The STL data 16A for the artificial tooth impression 46 is indicative of all the artificial teeth 15 included in the plate denture 10. In the present embodiment, the number of artificial teeth 15 is 14 in total. The STL data 16A for the artificial tooth impression 46 is typically created in accordance with the STL data 10A for the plate denture 10. The STL data 10A for the plate denture 10 and the STL data 16A for the artificial tooth impression 46 both include information indicative of the locations of the artificial teeth 15.

The STL data 16A for the artificial tooth impression 46 is created by following, for example, a procedure below. First, the STL data 10A for the plate denture 10 is cut in a cross section perpendicular or substantially perpendicular to the direction of extension of the artificial teeth 15. The STL data 10A for the plate denture 10 is cut into a round slice, for example, along a plane at a distance of a few or several mm from the extremity of the crown of any one of the artificial teeth 15 (i.e., the end of the crown of any one of the artificial teeth 15 that will come into contact with the opposing lower tooth). In one example, the STL data 10A is cut into a round slice along a plane at a distance of between about 1 mm and about 10 mm from the extremity of the crown of the third tooth (or canine tooth). The STL data 10A is typically cut into a round slice along a plane at a distance of between 3 mm and 6 mm inclusive from the extremity of the crown of the third tooth (or canine tooth). The STL data 10A is preferably cut into a round slice along a plane at a distance of greater than 3 mm and less than 6 mm from the extremity of the crown of the third tooth (or canine tooth). The STL data 10A may be cut into a round slice, for example, along a plane at a distance of 5.5 mm from the extremity of the crown of the third tooth (or canine tooth). This makes it possible to define placement grooves 46A in step S30 (which will be described below). The artificial teeth 15 (which include the front teeth, i.e., the first to third teeth) are stably placeable in the placement grooves 46A. Using an offsetting function included in three-dimensional editing functions of CAD software, the STL data 17A for the placement grooves 46A is then adjusted such that the crown of each artificial tooth 15 is extended outward by a predetermined offset distance of between about 0.1 mm and about 0.5 mm. The predetermined offset distance may be, for example, 0.2 mm. Thus, the placement grooves 46A in which the artificial teeth 15 are unlikely to wobble or incline would be formed in step S30 (which will be described below) if the artificial teeth 15 include, for example, curved front teeth. Consequently, the artificial teeth 15 having various shapes are stably placeable at desired locations such that the artificial teeth 15 are oriented in desired directions.

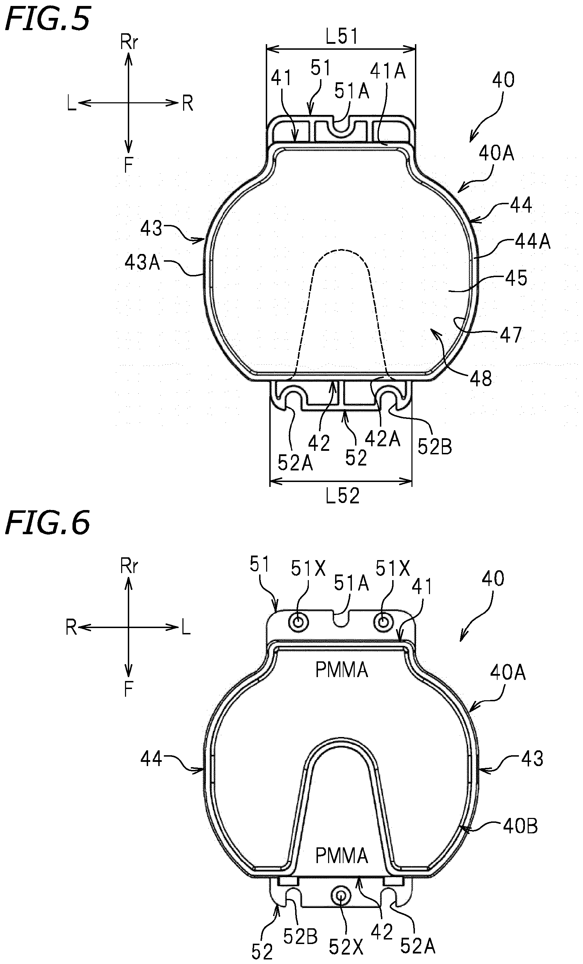

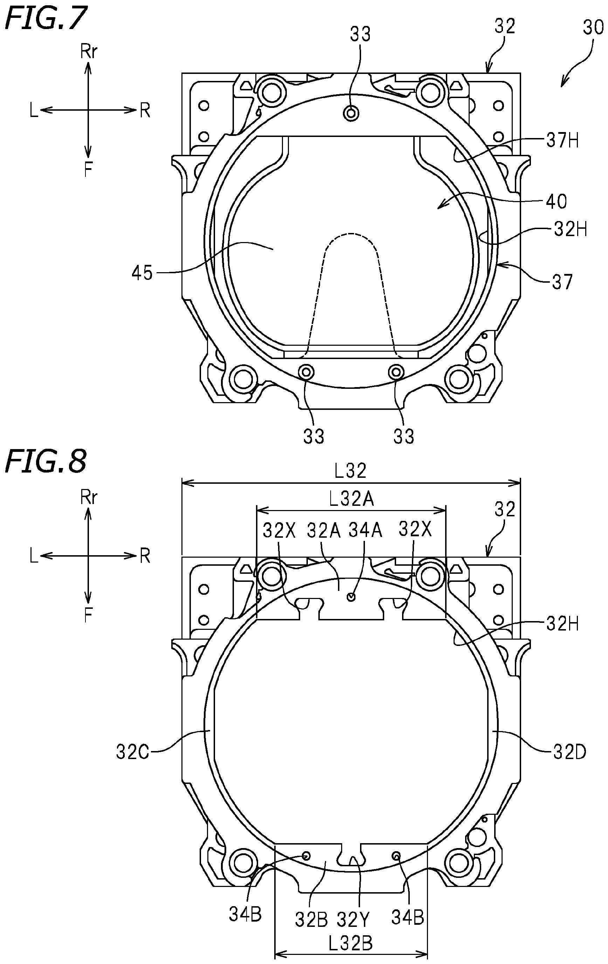

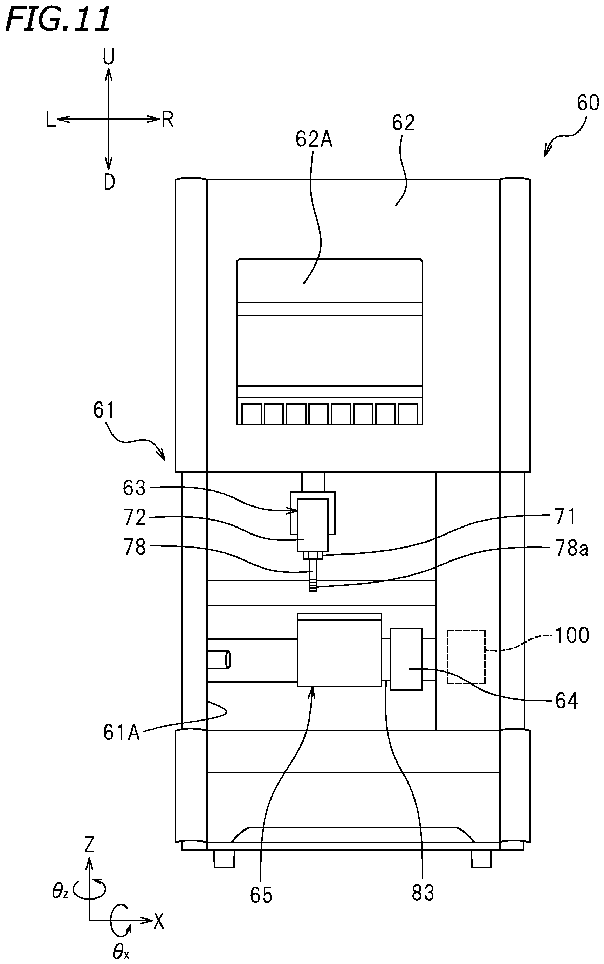

The denture mold preparing step (step S20) involves preparing the denture mold 40. FIG. 5 is a top view of the denture mold 40. FIG. 6 is a bottom view of the denture mold 40. The denture mold 40 is a mold for use in manufacture of the plate denture 10. The denture mold 40 is indirectly attachable to a cutting apparatus 60 (see FIG. 11) through an adapter 30 (see FIG. 7). The denture mold 40 may be directly attachable to the cutting apparatus 60. The denture mold 40 is a consumable article to be cut by the cutting apparatus 60 in step S30 (which will be described below). The denture mold 40 may be included in a plate denture manufacturing kit (which will be described below).

From the viewpoint of increasing moldability and reducing weight, the denture mold 40 is made of, for example, a resin material. The resin material may be thermosetting or thermoplastic. Examples of the resin material include, but not limited to, acrylic resin, polycarbonate resin, polyamide resin, polyester resin, and acrylonitrile butadiene styrene (ABS) resin. Any one of these resin materials may be used solely, or a combination of any two or more of these resin materials may be used. A blend of any two or more of these resin materials may be used, or any two or more of these resin materials may be used as materials that form separate portions of the denture mold 40. The denture mold 40 may be made of a ceramic material and/or a metallic material. As illustrated in FIG. 6, the lower surface of the denture mold 40 indicates what material the denture mold 40 is made of. In the present embodiment, the denture mold 40 is a combination of a main member 40A made of PMMA resin and a reinforcing member 40B. The main member 40A and the reinforcing member 40B are molded into one piece by an insert molding technique.

As illustrated in FIG. 5, the main member 40A includes a bottom wall 45, a first side wall 41, a second side wall 42, a third side wall 43, and a fourth side wall 44. The bottom wall 45 includes a flat surface. In the present embodiment, the bottom wall 45 is an example of a machinable surface. The first side wall 41 extends upward from the rear portion of the bottom wall 45. The second side wall 42 extends upward from the front portion of the bottom wall 45. The first side wall 41 and the second side wall 42 face each other. The third side wall 43 extends upward from the left portion of the bottom wall 45. The third side wall 43 connects the left end of the first side wall 41 with the left end of the second side wall 42. The third side wall 43 is curved away from the fourth side wall 44. The fourth side wall 44 extends upward from the right portion of the bottom wall 45. The fourth side wall 44 connects the right end of the first side wall 41 with the right end of the second side wall 42. The fourth side wall 44 is curved away from the third side wall 43. The third side wall 43 and the fourth side wall 44 face each other. The first side wall 41, the second side wall 42, the third side wall 43, and the fourth side wall 44 respectively include an upper surface 41A, an upper surface 42A, an upper surface 43A, and an upper surface 44A that are flush with each other. The upper surfaces 41A to 44A are thus equal in height from the bottom wall 45. In the present embodiment, each of the first to fourth side walls 41 to 44 is an example of a side wall extending upward from the bottom wall 45 (i.e., the machinable surface).

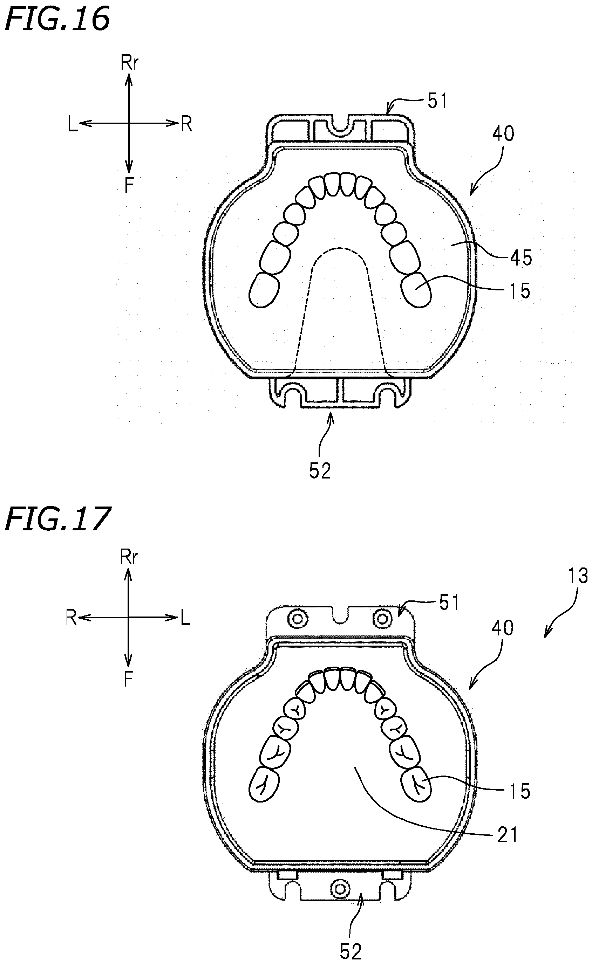

As illustrated in FIG. 5, the main member 40A includes an opening 47 and a forming space 48. The opening 47 is defined in a portion of the main member 40A facing the bottom wall 45. In other words, the opening 47 that faces upward is defined in the main member 40A. The forming space 48 is surrounded by the bottom wall 45, the first side wall 41, the second side wall 42, the third side wall 43, and the fourth side wall 44. The forming space 48 is larger than the plate denture 10 in a plan view. The depth of the forming space 48 (i.e., the length measured between the bottom wall 45 and the upper surfaces 41A to 44A of the first to fourth side walls 41 to 44) is greater than the maximum thickness of the plate denture 10 (e.g., the maximum length of the artificial teeth 15 in the direction of extension thereof). The height of the first to fourth side walls 41 to 44 (which is measured from the bottom wall 45) may be, but not limited to, between about 10 mm and 50 mm. The height of the first to fourth side walls 41 to 44 may be, for example, between about 20 mm and about 30 mm. The artificial tooth impression 46 is formed in the bottom wall 45 (which defines the bottom of the forming space 48) in step S30 (which will be described below). The artificial teeth 15 are placed on the bottom wall 45 in step S40 (which will be described below). A denture base material (which will be described below) is poured into the forming space 48 in step S50 (which will be described below). An inner surface of the main member 40A that defines the forming space 48 is preferably made of a resin material similar in type to the denture base material. The bottom wall 45, in particular, is preferably made of a resin material similar in type to the denture base material. The denture mold 40 is thus reliably bonded to a denture base material cured product 21 (see FIG. 17) in step S50 (which will be described below).

As illustrated in FIG. 5, the main member 40A includes a first retained portion 51 and a second retained portion 52. The first and second retained portions 51 and 52 are supported by the adapter 30. The first and second retained portions 51 and 52 are retained by the cutting apparatus 60 through the adapter 30. The first retained portion 51 is connected to the rear portion of the first side wall 41. The second retained portion 52 is connected to the front portion of the second side wall 42. The upper surface of the first retained portion 51 and the upper surface of the second retained portion 52 are located within the same plane. The lower surface of the first retained portion 51 and the lower surface of the second retained portion 52 are located within the same plane. The first retained portion 51 has a length L51 in a right-left direction. The second retained portion 52 has a length L52 in the right-left direction. Each of the lengths L51 and L52 may be about 1 cm or more. Each of the lengths L51 and L52 is preferably 2 cm or more, more preferably 3 cm or more, and still more preferably 4 cm or more. This reliably secures the first and second retained portions 51 and 52 to the adapter 30 so as to prevent misalignment during cutting. In the present embodiment, the length L51 of the first retained portion 51 differs from the length L52 of the second retained portion 52. The length L51 of the first retained portion 51 is longer than the length L52 of the second retained portion 52. Alternatively, the length L51 may be equal to the length L52.

As illustrated in FIG. 5, the first retained portion 51 is provided with a first recess 51A. The first recess 51A is defined in a substantially central portion of the first retained portion 51. The first recess 51A is recessed toward the first side wall 41. The first recess 51A passes through the first retained portion 51 in an up-down direction. One of screws 33 (see FIG. 7) is inserted into the first recess 51A in step S30 (which will be described below). The second retained portion 52 is provided with a second recess 52A and a third recess 52B. The second recess 52A is defined leftward of the third recess 52B. The second recess 52A is located leftward of the first recess 51A. The third recess 52B is located rightward of the first recess 51A. The second recess 52A and the third recess 52B are recessed toward the second side wall 42. The second recess 52A and the third recess 52B pass through the second retained portion 52 in the up-down direction. The other screws 33 are inserted into the second recess 52A and the third recess 52B in step S30 (which will be described below).

As illustrated in FIG. 6, the lower surface of the first retained portion 51 is provided with two protrusions 51X. One of the two protrusions 51X is provided rightward of the first recess 51A. The other one of the two protrusions 51X is provided leftward of the first recess 51A. The protrusions 51X extend downward and away from the first retained portion 51. The protrusions 51X are each fitted into an associated one of two fitting grooves 32X (see FIG. 8) of the adapter 30 in step S30 (which will be described below). The lower surface of the second retained portion 52 is provided with a protrusion 52X. The protrusion 52X is provided on a substantially central region of the second retained portion 52 located between the second recess 52A and the third recess 52B. The protrusion 52X extends downward and away from the second retained portion 52. The protrusion 52X is fitted into a fitting groove 32Y (see FIG. 8) of the adapter 30 in step S30 (which will be described below).

As illustrated in FIG. 6, the reinforcing member 40B is attached to the lower surface of the main member 40A. The reinforcing member 40B is substantially U-shaped in the plan view. The reinforcing member 40B is disposed to extend along the lower surface of the bottom wall 45. The reinforcing member 40B does not define the forming space 48 and thus does not come into contact with the denture base material (which will be described below). In the present embodiment, the reinforcing member 40B is made of a material (such as a resin material) similar in type to the material of the main member 40A. Alternatively, the main member 40A and the reinforcing member 40B may be made of different resin materials. The reinforcing member 40B may be or may include a member that is higher in at least one of impact resistance, hardness, and dimensional stability than the main member 40A. The reinforcing member 40B is not essential and may thus be optional. The denture mold 40 may consist of a single member (e.g., the main member 40A).

The denture mold cutting step (step S30) involves cutting the bottom wall 45 of the denture mold 40 using the cutting apparatus 60 so as to form the artificial tooth impression 46 in the bottom wall 45. The denture mold cutting step (step S30) includes, for example, a cutting data creating step (sub-step S31), a denture mold attaching step (sub-step S32), a cutting apparatus preparing step (sub-step S33), and a cutting step (sub-step S34). Any other sub-step may be performed at any time during step S30.

Sub-step S31 involves creating cutting data for the artificial tooth impression 46 in accordance with the three-dimensional data 16A (which is typically STL data) for the artificial tooth impression 46 prepared in the three-dimensional data preparing step (step S10). The cutting data is "numerical control (NC) data". The cutting data for the artificial tooth impression 46 is program data indicating a procedure by which the cutting apparatus 60 cuts the bottom wall 45 of the denture mold 40 so as to form the artificial tooth impression 46. The cutting data is created by, for example, a computer-aided manufacturing (CAM) device communicably connected to the CAD device. The functions of the CAM device may be implemented by software or hardware. Examples of CAM software include MillBox^{™} produced by CIMsystem.

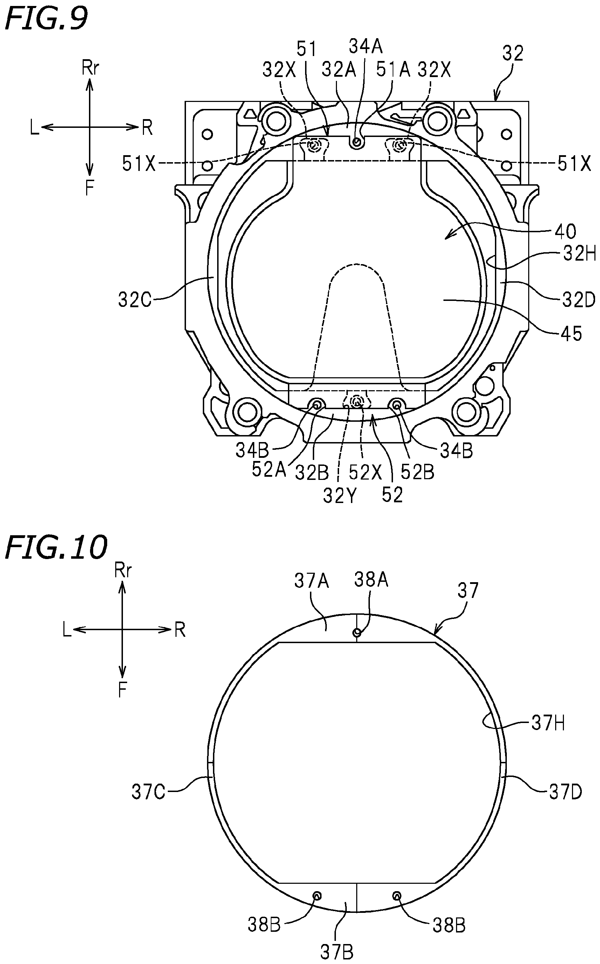

Sub-step S32 involves attaching the denture mold 40 to the adapter 30. FIG. 7 is a plan view of the adapter 30. The adapter 30 is a fixture to attach the denture mold 40 to the cutting apparatus 60. The adapter 30 includes a body 32 and a retaining plate 37. The denture mold 40 is sandwiched between the body 32 and the retaining plate 37. Each of FIGS. 8 and 9 is a plan view of the body 32. FIG. 9 illustrates the body 32 and the denture mold 40 retained by the body 32. FIG. 10 is a plan view of the retaining plate 37. The first and second retained portions 51 and 52 of the denture mold 40 are retained by the adapter 30. The adapter 30 may be included in the plate denture manufacturing kit (which will be described below).

As illustrated in FIG. 8, the body 32 includes a first portion 32A, a second portion 32B, a third portion 32C, and a fourth portion 32D. The first portion 32A is provided with the two fitting grooves 32X recessed away from the second portion 32B. The two protrusions 51X (see FIG. 6) of the denture mold 40 are each fitted into an associated one of the two fitting grooves 32X. The second portion 32B is provided with the fitting groove 32Y recessed away from the first portion 32A. The protrusion 52X (see FIG. 6) of the denture mold 40 is fitted into the fitting groove 32Y. The third portion 32C connects the left end of the first portion 32A with the left end of the second portion 32B. The fourth portion 32D connects the right end of the first portion 32A with the right end of the second portion 32B. The first portion 32A and the second portion 32B are located below the third portion 32C and the fourth portion 32D. An opening 32H is defined inward of the first to fourth portions 32A to 32D. The forming space 48 (see FIG. 5) of the denture mold 40 is disposed in the opening 32H.

As illustrated in FIG. 8, the first portion 32A has a length L32A in the right-left direction, the second portion 32B has a length L32B in the right-left direction, and the body 32 has a total length L32 in the right-left direction. Each of the lengths L32A and L32B may be about one-fifth or more of the total length L32. Each of the lengths L32A and L32B is preferably one-fourth or more of the total length L32. Each of the lengths L32A and L32B may preferably be, for example, one-third or more of the total length L32. The denture mold 40 is thus more stably retained by the adapter 30 so as to prevent misalignment during cutting. The first portion 32A faces the first retained portion 51 (see FIG. 5) of the denture mold 40. The length L32A of the first portion 32A is equal to or longer than the length L51 of the first retained portion 51. The second portion 32B faces the second retained portion 52 (see FIG. 5) of the denture mold 40. The length L32B of the second portion 32B is equal to or longer than the length L52 of the second retained portion 52. In the present embodiment, the length L32A of the first portion 32A differs from the length L32B of the second portion 32B. The length L32A of the first portion 32A is longer than the length L32B of the second portion 32B. This prevents the denture mold 40 from being attached back-to-front to the adapter 30, making it possible to avoid mistakes during attaching operation.

As illustrated in FIG. 9, the first portion 32A of the body 32 is provided with a threaded hole 34A. With the denture mold 40 retained by the body 32, the threaded hole 34A overlaps with the first recess 51A defined in the first retained portion 51 (see FIG. 5) of the denture mold 40 in the plan view. The second portion 32B of the body 32 is provided with two threaded holes 34B. With the denture mold 40 retained by the body 32, one of the two threaded holes 34B overlaps with the second recess 52A of the second retained portion 52 (see FIG. 5) of the denture mold 40 in the plan view, and the other one of the two threaded holes 34B overlaps with the third recess 52B of the second retained portion 52 (see FIG. 5) of the denture mold 40 in the plan view. The denture mold 40 is thus not fastened with the screws 33. More specifically, the first and second retained portions 51 and 52 are not fastened with the screws 33.

As illustrated in FIG. 10, the retaining plate 37 has an annular outer shape. The retaining plate 37 is detachably attached to the body 32. The retaining plate 37 includes a first portion 37A, a second portion 37B, a third portion 37C, and a fourth portion 37D. The first portion 37A of the retaining plate 37 faces the first portion 32A of the body 32. The first portion 37A presses the first retained portion 51 (see FIG. 5) of the denture mold 40 against the body 32. The second portion 37B of the retaining plate 37 faces the second portion 32B of the body 32. The second portion 37B presses the second retained portion 52 (see FIG. 5) of the denture mold 40 against the body 32. The third portion 37C of the retaining plate 37 faces the third portion 32C of the body 32. The fourth portion 37D of the retaining plate 37 faces the fourth portion 32D of the body 32. An opening 37H is defined inward of the first to fourth portions 37A to 37D. The forming space 48 (see FIG. 5) of the denture mold 40 is disposed in the opening 37H.

The first portion 37A of the retaining plate 37 is provided with a threaded hole 38A disposed to overlap with the threaded hole 34A of the body 32 in the plan view. The second portion 37B of the retaining plate 37 is provided with threaded holes 38B disposed to overlap with the threaded holes 34B of the body 32 in the plan view.

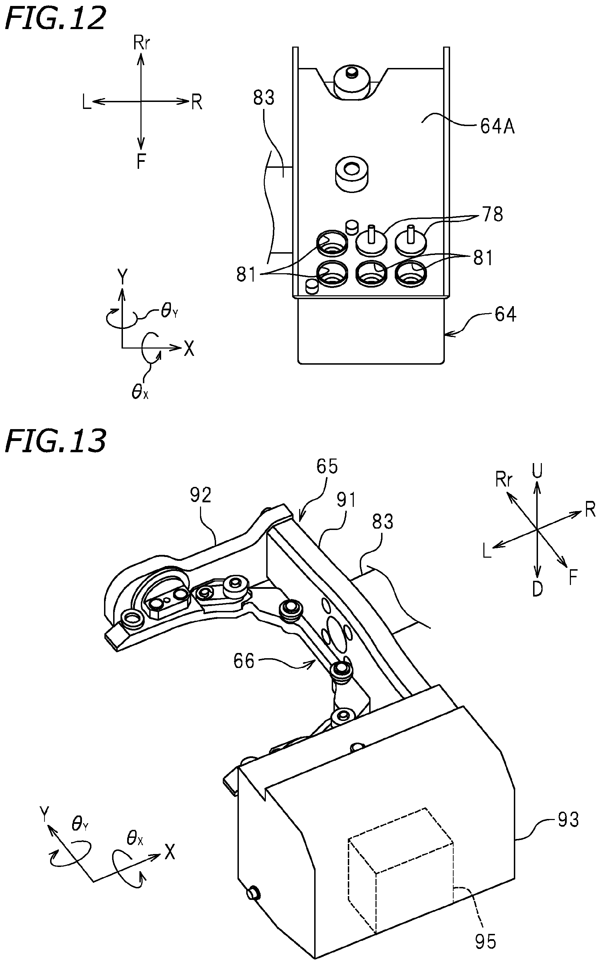

As illustrated in FIG. 7, with the denture mold 40 retained by the body 32 and pressed by the retaining plate 37, the screws 33 are inserted through the threaded holes 34A and 34B of the body 32 and the threaded holes 38A and 38B of the retaining plate 37. The body 32 and the retaining plate 37 are thus fastened to each other with the screws 33 at three locations. The first retained portion 51 of the denture mold 40 is sandwiched between the first portion 32A of the body 32 and the first portion 37A of the retaining plate 37. The second retained portion 52 of the denture mold 40 is sandwiched between the second portion 32B of the body 32 and the second portion 37B of the retaining plate 37. Because the denture mold 40 is stably retained by the adapter 30, the present embodiment prevents misalignment during cutting or, in particular, misalignment within an XY plane of a clamp 66 (see FIG. 13).

Sub-step S33 involves preparing the cutting apparatus 60. FIG. 11 is a front view of the cutting apparatus 60. FIG. 11 illustrates the cutting apparatus 60, with its cover 62 opened. In the following description concerning the cutting apparatus 60, the terms "rightward" and "leftward" respectively refer to a rightward direction and a leftward direction with respect to an operator (e.g., a dental technician) facing the front of the cutting apparatus 60. The term "forward" refers to a direction away from the rear of the cutting apparatus 60 and toward the operator. The term "rearward" refers to a direction away from the operator and toward the rear of the cutting apparatus 60. Assuming that an X axis, a Y axis, and a Z axis are perpendicular to each other, the cutting apparatus 60 is disposed on a plane defined by the X axis and the Y axis. The X axis extends in a right-left direction. The Y axis extends in a front-rear direction. The Z axis extends in an up-down direction. The reference sign θ_{X} represents a rotational direction around the X axis. The reference sign θ_{Y} represents a rotational direction around the Y axis. The reference sign θ_{Z} represents a rotational direction around the Z axis. These directions are defined merely for the sake of convenience of description and do not limit in any way how the cutting apparatus 60 may be installed.

As illustrated in FIG. 11, the cutting apparatus 60 includes a case body 61, the cover 62, a spindle 63, a tool magazine 64 (see also FIG. 12), a rotary support 65 (see also FIG. 13), the clamp 66 (see FIG. 13), and a controller 100. The case body 61 has a box shape. The case body 61 includes a machining space 61A defined therein. The front portion of the case body 61 is provided with an opening. The cover 62 is movable along the front end of the case body 61 in the up-down direction. The machining space 61A is openable and closable by the cover 62. Upward movement of the cover 62 brings the machining space 61A of the case body 61 into communication with an external space. The cover 62 is provided with a window 62A. This enables the operator to visually recognize the inside of the machining space 61A through the window 62A, for example, during cutting.

The spindle 63 grips a machining tool 78 during cutting. The spindle 63 cuts the bottom wall 45 (see FIG. 5) of the denture mold 40 by rotating the machining tool 78. The spindle 63 and the machining tool 78 serve as an example of a cutter to cut the denture mold 40. The spindle 63 includes a tool gripper 71 and a rotator 72 provided on the upper end of the tool gripper 71. The tool gripper 71 grips the upper end of the machining tool 78. The rotator 72 rotates the machining tool 78 gripped by the tool gripper 71. The rotator 72 extends in the up-down direction. The rotator 72 is connected with a first drive motor 72a (see FIG. 14). The first drive motor 72a is connected to the controller 100 and thus controlled by the controller 100. Driving the first drive motor 72a enables the rotator 72 to rotate in the rotational direction θ_{Z} around the Z axis. The rotation of the rotator 72 causes the machining tool 78 gripped by the tool gripper 71 to rotate in the rotational direction θ_{Z} around the Z axis. A first driver (not illustrated) is provided for the rotator 72. The rotator 72 is moved in the right-left direction and the up-down direction by the first driver.

FIG. 12 is a perspective view of the tool magazine 64. As illustrated in FIG. 12, the tool magazine 64 has a box shape. The tool magazine 64 includes an upper surface 64A provided with a plurality of holes 81 to hold the machining tools 78. Each machining tool 78 is inserted into or through an associated one of the holes 81 such that the upper portion of each machining tool 78 is exposed. Replacement of the machining tool 78 involves: returning the machining tool 78, gripped by the tool gripper 71, to an unoccupied one of the holes 81; moving the tool gripper 71 and the rotator 72 to a position over the machining tool 78 to be used next; and causing the tool gripper 71 to grip the upper end of the machining tool 78 to be used next.

FIG. 13 is a perspective view of the rotary support 65 and the clamp 66. The tool magazine 64 is provided with a first rotary shaft 83. The first rotary shaft 83 supports the rotary support 65 such that the rotary support 65 is rotatable. The first rotary shaft 83 extends in the right-left direction. The first rotary shaft 83 is coupled to the rotary support 65. The tool magazine 64 is provided with a second driver (not illustrated). The first rotary shaft 83 is rotatable in the rotational direction θ_{X} around the X axis by the second driver. The rotation of the first rotary shaft 83 in the rotational direction θ_{X} around the X axis causes the rotary support 65 to rotate in the rotational direction θ_{X} around the X axis. The rotary support 65 supports the clamp 66 such that the clamp 66 is rotatable. The rotary support 65 is substantially U-shaped in the plan view. The rotary support 65 is coupled to the first rotary shaft 83. The rotary support 65 includes a first portion 91, a second portion 92, and a third portion 93. The first portion 91 extends in the front-rear direction. The second portion 92 extends leftward from the rear end of the first portion 91. The third portion 93 extends leftward from the front end of the first portion 91. The clamp 66 is rotatably supported by the second portion 92 and the third portion 93. The third portion 93 is provided with a second drive motor 95 to rotate the clamp 66 in the rotational direction θ_{Y} around the Y axis.

The clamp 66 retains the denture mold 40 during cutting. The clamp 66 is an example of a retainer. In the present embodiment, the clamp 66 retains the adapter 30 having the denture mold 40 attached thereto. The clamp 66 indirectly retains the denture mold 40 through the adapter 30. In FIG. 13, the adapter 30 is not illustrated. The denture mold 40 retained by the clamp 66 is cut by the cutting apparatus 60.

FIG. 14 is a block diagram of the controller 100. The controller 100 will be described below. The controller 100 controls operations of the cutting apparatus 60 to cut the denture mold 40. As illustrated in FIG. 11, the controller 100 according to the present embodiment is provided inside the case body 61. Alternatively, a portion or an entirety of the controller 100 may be disposed outside the case body 61. The controller 100 may be, for example, a general-purpose personal computer connected to the cutting apparatus 60 such that wired or wireless communication is enabled therebetween. The controller 100 is not limited to any particular hardware configuration. The controller 100 includes, for example, a central processing unit (CPU), a read-only memory (ROM), a random-access memory (RAM), and a storage (such as a memory). The CPU executes a command included in a control program. The ROM stores the program to be executed by the CPU. The RAM is used as a working area where the program is to be expanded. The storage stores the program and various types of data.

The controller 100 is communicably connected to the first drive motor 72a and the second drive motor 95. The controller 100 is thus able to control the first drive motor 72a and the second drive motor 95. The controller 100 controls driving of the first drive motor 72a so as to control rotation of the rotator 72 of the spindle 63. The controller 100 controls the rotator 72 such that the rotator 72 moves in the right-left direction and the up-down direction. The controller 100 controls driving of the second drive motor 95 so as to control rotation of the clamp 66 in the rotational direction θ_{Y} around the Y axis. The controller 100 controls the first rotary shaft 83 such that the first rotary shaft 83 rotates in the rotational direction θ_{X} around the X axis.

The controller 100 includes a memory 101 and a cutting controller 102. The functions of the controller 100 may be implemented by software or hardware. The memory 101 is communicably connected to the CAM device. The cutting data created by the CAM device is stored in the memory 101. The cutting data typically includes a plurality of machining steps defining, using coordinate values, operations of the spindle 63 and operations of the clamp 66 that retains the denture mold 40.

Sub-step S34 involves cutting the denture mold 40 using the cutting apparatus 60. In accordance with the cutting data stored in the memory 101, the cutting controller 102 controls the operations of the spindle 63 and the clamp 66 so as to control cutting operations. The cutting controller 102 brings an extremity 78a (see FIG. 11) of the machining tool 78 (which is being rotated by the spindle 63) into contact with the bottom wall 45 of the denture mold 40. The bottom wall 45 is thus cut such that the artificial tooth impression 46 is formed in the bottom wall 45. FIG. 15 is a plan view of the artificial tooth impression 46 formed in the bottom wall 45 of the denture mold 40. The artificial tooth impression 46 includes the placement grooves 46A into which the artificial teeth 15 are to be fitted. In the present embodiment, the number of placement grooves 46A is 14 in total. The placement grooves 46A of the artificial tooth impression 46 each have a depth of, for example, between about 2 mm and about 5 mm.

The artificial tooth placing step (step S40) involves removing the denture mold 40 (a portion of which has been cut into the artificial tooth impression 46) from the cutting apparatus 60, and placing the artificial teeth 15 on the denture mold 40. The artificial tooth placing step (step S40) may be performed, with the adapter 30 attached to the denture mold 40, or may be performed after the adapter 30 is detached from the denture mold 40. Any artificial teeth that have been used in the related field are usable as the artificial teeth 15. A portion of the bottom wall 45 of the denture mold 40 that defines the artificial tooth impression 46 may be made of, for example, a resin material similar in type to the denture base material (which will be described below). The artificial teeth 15 may be, for example, commercially available resin teeth, hard resin teeth, or porcelain teeth. The artificial teeth 15 may be in the form of a bridge including artificial teeth integral with each other. The artificial teeth 15 or bridge may be fabricated by cutting, for example, a commercially available disk-shaped or block-shaped artificial tooth material using the cutting apparatus 60. The artificial teeth 15 or bridge may be fabricated by using, for example, a three-dimensional printing apparatus (or 3D printer) that is prepared separately. The artificial teeth 15 or bridge may be included in the plate denture manufacturing kit (which will be described below).

FIG. 16 is a plan view of the artificial teeth 15 placed on the denture mold 40. As illustrated in FIG. 16, the artificial teeth 15 are placed in the artificial tooth impression 46 formed by cutting the bottom wall 45 of the denture mold 40 in sub-step S34. Specifically, the artificial teeth 15 are each fittingly placed in an associated one of the placement grooves 46A defined in the artificial tooth impression 46. The artificial teeth 15 are thus fitted into the placement grooves 46A such that each of the artificial teeth 15 is disposed in a predetermined position and oriented in a predetermined direction. Cutting portions of the bottom wall 45 into the placement grooves 46A using the cutting apparatus 60 reduces the risk of arranging the artificial teeth 15 at wrong positions or orienting the artificial teeth 15 in wrong directions when a dental technician places the artificial teeth 15 on the denture mold 40. In the present embodiment, the artificial teeth 15 are placed in the placement grooves 46A such that the roots of the artificial teeth 15 face upward. In other words, the artificial teeth 15 are placed in the placement grooves 46A such that the crowns of the artificial teeth 15 (i.e., portions of the artificial teeth 15 that will come into contact with the lower teeth) face downward. The artificial teeth 15 are secured to the denture mold 40 just by fitting the artificial teeth 15 into the placement grooves 46A without using any chemical substance, such as an adhesive. This reduces the amount of bubbles produced in step S50 (which will be described below).

The denture base material curing step (step S50) involves pouring and curing the denture base material so as to integrate the denture mold 40, the artificial teeth 15, and the denture base material cured product 21 with each other. The denture base material curing step (step S50) may be performed, with the adapter 30 attached to the denture mold 40, or may be performed after the adapter 30 is detached from the denture mold 40. The denture base material curing step (step S50) includes, for example, a denture base material preparing step (sub-step S51), a denture base material pouring step (sub-step S52), and a one-piece product fabricating step (sub-step S53). In the present embodiment, sub-steps S52 and S53 are each performed once so as to integrate the denture mold 40, the artificial teeth 15, and the denture base material cured product 21 with each other. Any other sub-step may be performed at any time during step S50.

Sub-step S51 involves preparing the denture base material. Any known material that has conventionally been used to form a denture base is usable as the denture base material. Examples of the denture base material include a dental resin material, such as denture base resin (which may hereinafter be referred to as a "denture base resin composition"), dental wax, a dental ceramic material, and gypsum. The denture base material may be a dental curable composition. The denture base resin may contain a polymerizable compound. Examples of the denture base resin include autopolymer resin that starts polymerization at a temperature of lower than 65°C, heat-curing resin that starts polymerization by being heated at 65°C or higher, and photopolymerization resin that starts polymerization when exposed to light. Autopolymer resin is preferably usable as the denture base material because autopolymer resin is shrunk less during polymerization, relatively less expensive, and more easily available than heat-curing resin.

The denture base resin preferably contains resin similar in type to the material of the denture mold 40. When a portion of the denture mold 40 that defines the forming space 48, for example, is made of acrylic resin (such as PMMA), acrylic resin is preferably used as the denture base resin. Examples of the denture base resin usable include polycarbonate resin, polyamide resin, and polyester resin. As specified in Japanese Industrial Standards (JIS) T6501 :2012, the acrylic resin is, for example, a substance (1) that is powder whose main component is at least one of a homopolymer of methacrylate ester and a copolymer containing methacrylate ester, a substance (2) that is a liquid whose main component is a methacrylate ester monomer, or a mixture of the substance (1) and the substance (2). As used herein, the term "main component" refers to a component higher in mass percentage than other components. The acrylic resin may be, for example, a combination of powder whose main component is a copolymer of methyl methacrylate (MMA) and 2-ethylhexyl acrylate and a liquid whose main component is methyl methacrylate (MMA). The acrylic resin may be, for example, a combination of powder whose main component is polymethyl methacrylate (PMMA) resin and a liquid whose main component is methyl methacrylate (MMA). The acrylic resin may contain component(s) other than those above. Examples of the component(s) include additives, such as a reaction initiator, a coloring agent, a stabilizer, a plasticizer, a lubricant, a surfactant, and an ultraviolet light absorber.

The use of the mixture of the substances (1) and (2) as the acrylic resin first involves mixing the powdery substance (1) and the liquid substance (2) at a predetermined ratio so as to prepare a fluid composition. The composition may include bubbles produced by a reaction between the powdery substance (1) and the liquid substance (2). Thus, the use of the mixture of the substances (1) and (2) preferably involves removing the bubbles from the composition (or defoaming the composition). The composition is defoamed by, for example, transmitting vibrations to the composition from a vibrator, or applying ultrasound to the composition from an ultrasound applicator.

Sub-step S52 involves pouring the denture base material (which has been prepared in sub-step S51) into the forming space 48, with the artificial teeth 15 placed in the forming space 48 of the denture mold 40. In the present embodiment, the denture base material is poured into the forming space 48 through the opening 47 of the denture mold 40 such that the forming space 48 is filled with the denture base material. The amount of the denture base material to be poured is preferably set such that the denture base material will come into contact with at least portions of all the artificial teeth 15 placed in the forming space 48. The amount of the denture base material to be poured is set such that the liquid level of the denture base material will be located below the upper surfaces 41A to 44A of the first to fourth side walls 41 to 44. In the present embodiment, the amount of the denture base material to be poured is set such that a cured product larger than the denture base 20 of the plate denture 10 to be fabricated will be formed. In other words, the amount of the denture base material to be poured is set such that the liquid level of the denture base material will be located slightly below the upper surfaces 41A to 44A of the first to fourth side walls 41 to 44. The amount of the denture base material to be poured is set such that all the artificial teeth 15 placed in the forming space 48 will be completely buried in the denture base material.

Sub-step S53 involves curing the denture base material so as to fabricate the one-piece product 13 (see FIG. 17). The one-piece product 13 includes the denture mold 40, the artificial teeth 15, and the denture base material cured product 21 that are integral with each other. The fabrication of the one-piece product 13 involves, for example, polymerizing the denture base material (or more specifically, a polymerizable compound contained in the denture base material). The denture base material is polymerized, for example, in a manner described below.

First, a pressure polymerizer (e.g., a pressure pot) is prepared. The denture mold 40 into which the denture base material has been poured in sub-step S52 is subsequently left at rest in the polymerizer. Water is then poured between the polymerizer and the denture mold 40. The amount of water to be poured is adjusted such that the water will not penetrate into the forming space 48 of the denture mold 40. The amount of water to be poured is adjusted such that a portion of the denture mold 40, for example, is immersed in the water. In one example, about a quarter to about three-quarters of each of the first to fourth side walls 41 to 44 is immersed in the water. In another example, one-half of each of the first to fourth side walls 41 to 44 is immersed in the water. The amount of water to be poured is adjusted such that the level of the water will be located, for example, below the upper surface of the denture mold 40 (i.e., the upper surfaces 41A to 44A of the first to fourth side walls 41 to 44). The amount of water to be poured is adjusted such that the level of the water will be located, for example, below the liquid level of the denture base material. The lid of the polymerizer is then closed such that an enclosed space is defined in the polymerizer. In this state, at least a portion of the opening 47 of the denture mold 40 is not closed but is open. Thus, if bubbles are produced during polymerization, the bubbles produced would be likely to come out of the denture mold 40. Consequently, the present embodiment prevents generation of voids caused by the bubbles trapped in the cured product 21.

The condition of the inside of the polymerizer is adjusted to meet predetermined requirements such that the denture base material produces a polymerization reaction. When the denture base material is, for example, denture base resin, the inside of the polymerizer may be pressurized at a pressure of between about 0.01 MPa and about 0.5 MPa. The inside of the polymerizer may be pressurized at, for example, a pressure of between 0.1 MPa and 0.3 MPa inclusive. The inside of the polymerizer is preferably pressurized at a pressure of above 0.1 MPa and below 0.3 MPa. In one example, the inside of the polymerizer may be pressurized at a pressure of 0.2 MPa. When the denture base material is, for example, autopolymer resin, the water inside the polymerizer may be heated to a temperature higher than room temperature. The water inside the polymerizer may be heated to, for example, a temperature of between about 30°C and about 60°C. In one example, the water inside the polymerizer may be heated to 50°C. When the denture base material is, for example, heat-curing resin, the water inside the polymerizer may be heated to about 65°C or above. The water inside the polymerizer may be heated to, for example, a temperature of between about 65°C and about 80°C. The polymerizer is maintained in this condition for a predetermined period of time. The polymerizer may be maintained in this condition for about 10 minutes or more. The polymerizer may be maintained in this condition for, for example, about 30 minutes to about 60 minutes. In one example, the polymerizer may be maintained in this condition for 30 minutes. The denture base material is thus polymerized so as to increase at least one of bending strength and hardness. The denture base material cured product 21 is firmly bonded to the artificial teeth 15. The denture base material cured product 21 is firmly bonded to the bottom wall 45 and the first to fourth side walls 41 to 44 of the denture mold 40. As a result, the one-piece product 13 is fabricated.

FIG. 17 illustrates an example of the one-piece product 13. The cured product 21, the denture mold 40, and the artificial teeth 15 included in the one-piece product 13 are integral with each other to such an extent that the cured product 21, the denture mold 40, and the artificial teeth 15 will not be separated from each other during, for example, cutting. The denture base material cured product 21 is machined into the denture base 20 in step S60 (which will be described below). The denture base material cured product 21 and the denture mold 40 may be bonded to each other with a bonding force of about 10 N or more. The denture base material cured product 21 and the denture mold 40 are preferably bonded to each other with a bonding force of about 30 N or more. The denture base material cured product 21 and the denture mold 40 may be bonded to each other with a bonding force of, for example, 50 N or more. As used herein, the term "bonding force" refers to a bonding force compliant with JIS T6506:2005.

The one-piece product machining step (step S60) involves machining the one-piece product 13 so as to provide the plate denture 10. The machining process performed in step S60 may include at least one of a cutting process, a polishing process, a grinding process, and a cutting-off process. The one-piece product machining step (step S60) includes, for example, a cutting data creating step (sub-step S61), a one-piece product attaching step (sub-step S62), a cutting apparatus preparing step (sub-step S63), a one-piece product cutting step (sub-step S64), and a plate denture fabricating step (sub-step S65). Any other sub-step may be performed at any time during step S60. In an alternative embodiment, sub-steps S61 to S64 are not essential and may thus be optional. A dental technician may manually perform all the processes included in step S60.

Sub-step S61 involves creating cutting data for the plate denture 10 in accordance with the three-dimensional data 10A (which is typically STL data) for the plate denture 10 prepared in the three-dimensional data preparing step (step S10). The cutting data for the plate denture 10 is program data indicating a procedure by which the cutting apparatus 60 cuts the one-piece product 13 into the plate denture 10. The cutting data created is stored in the memory 101. The cutting data for the plate denture 10 may be prepared in a manner similar to that in which the cutting data for the artificial tooth impression 46 is prepared in sub-step S31. Sub-step S62 involves attaching the denture mold 40 to the adapter 30. The denture mold 40 may be attached to the adapter 30 in a manner similar to that in which the denture mold 40 is attached to the adapter 30 in sub-step S32.

Sub-step S63 involves preparing the cutting apparatus 60. The cutting apparatus 60 may be the same as or different from that prepared in sub-step S33. Sub-step S64 involves cutting the one-piece product 13 using the cutting apparatus 60. The cutting controller 102 brings the extremity 78a (see FIG. 11) of the machining tool 78 (which is being rotated by the spindle 63) into contact with the cured product 21 of the one-piece product 13 so as to cut away an unnecessary portion of the cured product 21. This provides the denture base 20. The cutting controller 102 may bring the extremity 78a of the machining tool 78 into contact with the denture mold 40 of the one-piece product 13 so as to cut away a portion of the denture mold 40 (e.g., a portion or an entirety of the bottom wall 45 and/or a portion or an entirety of each of the first to fourth side walls 41 to 44). The first and second retained portions 51 and 52 of the denture mold 40 are at least partially not cut away and are thus supported by the adapter 30 after cutting.

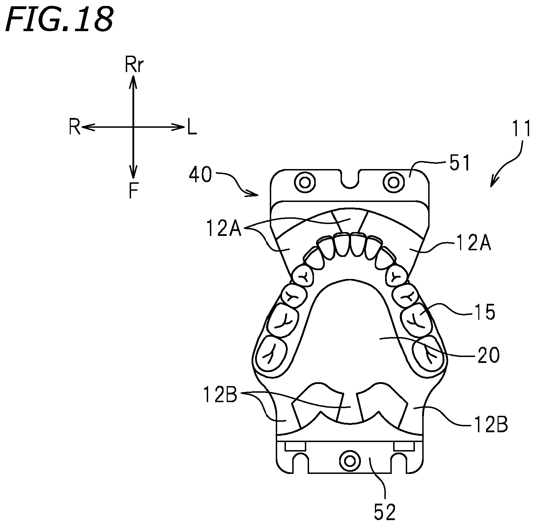

FIG. 18 illustrates an example of a cut product 11 provided by cutting the one-piece product 13 using the cutting apparatus 60. The cut product 11 includes the first and second retained portions 51 and 52 of the denture mold 40, the denture base 20, the artificial teeth 15, first connectors 12A, and second connectors 12B. The artificial teeth 15 are bonded to the denture base 20. The first connectors 12A connect the first retained portion 51 to the denture base 20. The second connectors 12B connect the second retained portion 52 to the denture base 20.

Sub-step S65 involves fabricating the plate denture 10 from the cut product 11. Sub-step S65 involves, for example, removing the first and second retained portions 51 and 52 of the denture mold 40 from the cut product 11. In one example, the dental technician cuts away the first and second retained portions 51 and 52 from the cut product 11 using a tool, such as a cutter having an edge. When the cut product 11 includes the first and second connectors 12A and 12B as illustrated in FIG. 18, sub-step S65 involves removing the first and second connectors 12A and 12B so as to remove the first and second retained portions 51 and 52. Surfaces of the cut product 11 exposed, for example, by removing the first and second retained portions 51 and 52 are preferably polished so as to make the surface of the resulting plate denture 10 smoother. Sequentially performing the above-described steps in this manner fabricates the plate denture 10 (see FIG. 1) including the denture base 20 and the artificial teeth 15.

As described above, the manufacturing method according to the present embodiment involves forming the artificial tooth impression 46 in the denture mold 40 using the cutting apparatus 60 in accordance with the three-dimensional data 16A for the artificial tooth impression 46. The artificial tooth impression 46 includes the arrangement grooves 46A in which the artificial teeth 15 are to be placed. The dental technician is able to perform positioning of the artificial teeth 15 with respect to the opposing teeth just by placing the artificial teeth 15 in the placement grooves 46A. Thus, if the dental technician is inexperienced, he or she would be able to quickly place the artificial teeth 15 at proper positions. The manufacturing method disclosed herein involves pouring the denture base material into the denture mold 40, with the artificial teeth 15 placed in the placement grooves 46A, so as to make the denture base material cured product 21 and the artificial teeth 15 integral with each other. This enables the artificial teeth 15 to be integral with the cured product 21 at once. As described above, the manufacturing method disclosed herein reduces the time and effort required for bonding of the artificial teeth 15, resulting in an increase in efficiency. The manufacturing method disclosed herein also reduces the work burden on the dental technician and facilitates fabrication of the plate denture 10. Consequently, the quality of the plate denture 10 is unlikely to depend on the skill of the dental technician, enabling fabrication of the plate denture 10 stable in quality.

The manufacturing method according to the present embodiment includes the three-dimensional data preparing step (step S10) that involves preparing the three-dimensional data 10A for the plate denture 10. The manufacturing method according to the present embodiment includes the one-piece product machining step (step S60) to be performed after the denture base material curing step (step S50). The one-piece product machining step (step S60) involves indirectly attaching the one-piece product 13 to the cutting apparatus 60 through the first and second retained portions 51 and 52, and machining at least the cured product 21 in accordance with the three-dimensional data 10A for the plate denture 10. The cured product 21 of the one-piece product 13 is thus easily machined into the denture base 20. Consequently, the manufacturing method according to the present embodiment reduces the time and effort required to provide the denture base 20, resulting in an increase in efficiency. Attaching the one-piece product 13 to the cutting apparatus 60 through the first and second retained portions 51 and 52 makes it unlikely that misalignment will occur during cutting, enabling accurate machining.

The manufacturing method according to the present embodiment includes the denture mold preparing step (step S20) that involves preparing the denture mold 40 including the forming space 48 which is surrounded by the bottom wall 45 and the side walls 41 to 44 extending upward from the bottom wall 45 and into which the denture base material is to be poured. The manufacturing method according to the present embodiment includes the denture base material curing step (step S50) that involves pouring the denture base material into the forming space 48 and curing the denture base material. Because the denture mold 40 includes the forming space 48, the denture base material is curable in the denture mold 40.

The manufacturing method according to the present embodiment includes the denture mold preparing step (step S20) that involves preparing the denture mold 40 including the first to fourth side walls 41 to 44 each having a height greater than the maximum thickness of the denture base 20. The manufacturing method according to the present embodiment includes the denture base material curing step (step S50) that involves fabricating the one-piece product 13 in a single curing process. This enables more efficient fabrication of the plate denture 10.

The manufacturing method according to the present embodiment includes the artificial tooth placing step (step S40) that involves fitting the crown portions of the artificial teeth 15 into the placement grooves 46A without using any adhesive. This reduces the amount of bubbles produced in the denture base material curing step (step S50).

The manufacturing method according to the present embodiment includes the denture mold preparing step (step S20) that involves preparing the denture mold 40 including the bottom wall 45 made of resin. The manufacturing method according to the present embodiment includes the denture base material curing step (step S50) that involves using, as the denture base material, polymerizable resin containing resin similar in type to resin that forms the bottom wall 45. The denture base material curing step (step S50) thus increases the strength of bonding between the denture mold 40 and the denture base material cured product 21. The manufacturing method according to the present embodiment involves preparing the denture mold 40 including the bottom wall 45 made of acrylic resin, and using acrylic resin as the denture base material. When acrylic resin is polymerized, methacrylate ester penetrates into the molecular chains of the denture mold 40 and spreads therethrough, producing a polymerization reaction. The denture mold 40 is thus chemically bonded to the denture base material cured product 21. Consequently, the denture mold 40 and the denture base material cured product 21 are more securely integrated with each other.

The manufacturing method according to the present embodiment includes the denture mold preparing step (step S20) that involves preparing the denture mold 40 including the protrusions 51X on the first retained portion 51 and the protrusion 52X on the second retained portion 52. The denture mold cutting step (step S30) involves preparing the adapter 30 including the fitting grooves 32X into which the protrusions 51X are to be fitted, and the fitting groove 32Y into which the protrusion 52X is to be fitted. The denture mold cutting step (step S30) then involves fitting the protrusions 51X of the first retained portion 51 into the fitting grooves 32X of the adapter 30, and fitting the protrusion 52X of the second retained portion 52 into the fitting groove 32Y of the adapter 30. The denture mold 40 is thus attached to the adapter 30, so that the denture mold 40 is indirectly attached to the cutting apparatus 60 through the adapter 30. The denture mold preparing step (step S20), for example, involves preparing the denture mold 40 that includes the first retained portion 51 including the two protrusions 51X, and the second retained portion 52 disposed opposite to the first retained portion 51 and including the protrusion 52X. The denture mold cutting step (step S30) involves preparing the adapter 30 including three or more fitting grooves. The three or more fitting grooves include the fitting grooves 32X into which the protrusions 51X are to be fitted, and the fitting groove 32Y into which the protrusion 52X is to be fitted. This more successfully reduces or prevents misalignment during cutting or, in particular, misalignment within the XY plane (see FIG. 13).

The plate denture 10 manufactured by the manufacturing method according to the present embodiment is usable as a complete denture for a patient.

The manufacturing method according to the present embodiment enables suitable use of the denture mold 40. The manufacturing method according to the present embodiment enables suitable use of the plate denture manufacturing kit including the denture mold 40. In one example, the plate denture manufacturing kit includes at least one denture mold 40 and the adapter 30. In another example, the plate denture manufacturing kit includes at least one denture mold 40 and at least one artificial tooth 15.

The denture mold 40 includes the first and second retained portions 51 and 52 and is attachable to the adapter 30. The first and second retained portions 51 and 52 may be made of a material that is harder and more stable in shape than the denture base material cured product 21. The first and second retained portions 51 and 52 may be higher in bending strength than the denture base material cured product 21. As used herein, the term "bending strength" refers to bending strength compliant with JIS T6501 :2012. The first and second retained portions 51 and 52 may have a bending strength of between about 50 MPa and about 200 MPa. The bending strength of the first and second retained portions 51 and 52 may be, for example, between about 70 MPa and about 150 MPa. The first and second retained portions 51 and 52 may be higher in fracture toughness than the denture base material cured product 21. As used herein, the term "fracture toughness" refers to fracture toughness compliant with JIS T6501:2012.

In the present embodiment, the number of retained portions is two. The number of retained portions may be appropriately changed in accordance with, for example, the shape of the adapter 30. The first and second retained portions 51 and 52 may have, for example, an annular shape or a frame shape conforming to the opening 32H of the adapter 30. The first and second retained portions 51 and 52 may be connected to form an L shape or a U shape. The denture mold 40 may be directly attachable to the cutting apparatus 60.

The denture mold 40 is made of a material machinable by the cutting apparatus 60 (e.g., a material easily cuttable by the cutting apparatus 60). The denture mold 40 is made of a material that is unlikely to suffer heat distortion. The heat distortion temperature of the denture mold 40 may be, for example, about 55°C or above. The heat distortion temperature of the denture mold 40 may be between 60°C and 150°C inclusive and is preferably above 60°C and below 150°C. As used herein, the term "heat distortion temperature" refers to a heat distortion temperature compliant with JIS K7191:2007. The denture mold 40 stably retains the denture base material (which has been poured into the forming space 48 in step S50) until the denture base material is cured. The denture mold 40 would preferably maintain the state where the upper surfaces 41A to 44A are flush with each other if the denture mold 40 is pressurized and/or heated, for example, in step S50. The forming space 48 of the denture mold 40 would preferably have a volume change of 1% or less (e.g., a volume change of 0.5% or less) if the denture mold 40 is pressurized and/or heated, for example, in step S50. The forming space 48 of the denture mold 40 may have a volume change of 1% or less (e.g., a volume change of 0.5% or less) after the denture mold 40 is pressurized at 0.2 MPa and heated at 50°C for 30 minutes, for example.

Although the preferred embodiment of the present invention has been described thus far, the embodiment described above is only illustrative. The present invention may be embodied in various other forms. The techniques described in the claims include various changes and modifications made to the embodiment illustrated above. Any or some of the technical features of the foregoing embodiment may be replaced with any or some of the technical features of variations described below. Any or some of the technical features of the variations described below may be added to the technical features of the foregoing embodiment. Any or some of the technical features of the foregoing embodiment may be appropriately combined with any or some of the technical features of the variations described below. Unless described as being essential, some of the technical features of the foregoing embodiment and the variations thereof described below may be optional.

The foregoing embodiment has been described on the assumption that the manufacturing method involves using the denture mold 40 so as to manufacture the plate denture 10 that is a complete denture for the upper jaw. The manufacturing method disclosed herein may be used to manufacture any other suitable type of denture. The manufacturing method disclosed herein may be used to manufacture, for example, a complete denture for the lower jaw or a partial denture. The manufacturing method disclosed herein may be used to manufacture a "non-clasp denture" including no metal clasp and made of, for example, thermoplastic resin having high elasticity. The denture mold 40 may be made of any suitable material and may have any suitable shape.

The foregoing embodiment has been described on the assumption that the portion of the denture mold 40 that defines the forming space 48 is made of acrylic resin and acrylic resin is used as the denture base material. The portion of the denture mold 40 that defines the forming space 48 may be made of any other suitable material. Any other suitable material may be used as the denture base material. The portion of the denture mold 40 that defines the forming space 48 may be made of polycarbonate based resin, such as polycarbonate, and the denture base material may be polycarbonate resin. Also in this case, the denture base material cured product 21 and the denture mold 40 are firmly bonded to each other. The portion of the denture mold 40 that defines the forming space 48 may be made of polyamide based resin such as polyamide, and the denture base material may be polyamide resin. Also in this case, the denture base material cured product 21 and the denture mold 40 are firmly bonded to each other.

In the foregoing embodiment, the denture mold 40 includes the first retained portion 51 provided with a single recess (i.e., the first recess 51A), and the second retained portion 52 provided with two recesses (i.e., the second recess 52A and the third recess 52B), so that the number of recesses of the denture mold 40 is three in total. The denture mold 40, however, may be provided with any other suitable number of recesses disposed at any other suitable locations. The locations and the number of recesses may be appropriately changed in accordance with, for example, the shape of the adapter 30. In the foregoing embodiment, the number of recesses of the first retained portion 51 differs from the number of recesses of the second retained portion 52. Alternatively, the number of recesses of the first retained portion 51 may be equal to the number of recesses of the second retained portion 52.

In the foregoing embodiment, the denture mold 40 includes the first retained portion 51 provided with the two protrusions 51X, and the second retained portion 52 provided with the single protrusion 52X, so that the number of protrusions of the denture mold 40 is three in total. The denture mold 40, however, may be provided with any other suitable number of protrusions disposed at any other suitable locations. The locations and the number of protrusions may be appropriately changed in accordance with, for example, the shape of the adapter 30. In the foregoing embodiment, the number of protrusions of the first retained portion 51 differs from the number of protrusions of the second retained portion 52. Alternatively, the number of protrusions of the first retained portion 51 may be equal to the number of protrusions of the second retained portion 52.

In the foregoing embodiment, the denture mold 40 includes the forming space 48 surrounded by the bottom wall 45 and the first to fourth side walls 41 to 44 extending upward from the bottom wall 45. The forming space 48, however, does not necessarily have to be surrounded by the bottom wall 45 and the first to fourth side walls 41 to 44. For example, suppose that the denture mold 40 includes no side wall or includes a side wall whose height is lower than the maximum thickness of the denture base 20. In this case, an outer container may be additionally prepared, and the outer container may be used in combination with the denture mold 40. The outer container may be used as a replacement for the side walls 41 to 44. The outer container may be, for example, a tubular member conforming in shape to the bottom wall 45. The material of the outer container may be similar to the material of the denture mold 40. The properties of the material of the outer container may be similar to the properties of the material of the denture mold 40.

The manufacturing method described above involves performing sub-step S52 (which involves pouring the denture base material into the forming space 48) once and performing sub-step S53 (which involves curing the denture base material) once so as to fabricate the one-piece product 13. Sub-steps S52 and S53 may each be performed any number of times. The denture base material may be poured into the forming space 48 on separate occasions. In this case, sub-steps S52 and S53 may be repeatedly performed. An alternative example may first involve pouring a small amount of denture base material into the forming space 48 (which is enough to cover the interface between the artificial teeth 15 and the bottom wall 45) and curing the denture base material, and then involve pouring the remaining denture base material into the forming space 48 and curing the remaining denture base material.

## Claims

1. A method for manufacturing a plate denture (10) including a denture base (20) and an artificial tooth (15) placed on the denture base (20), the method comprising:
a three-dimensional data preparing step (S10) involving preparing three-dimensional data (16A) for an artificial tooth impression (46) that is an impression for the artificial tooth (15) to be placed on the denture base (20);
a denture mold preparing step (S20) involving preparing a denture mold (40) including
a retained portion (51, 52) to be directly or indirectly attached to a cutting apparatus (60), and
a machinable surface (45) to be cut by the cutting apparatus (60);
a denture mold cutting step (S30) involving directly or indirectly attaching the denture mold (40) to the cutting apparatus (60) through the retained portion (51, 52), and cutting the machinable surface (45) of the denture mold (40) so as to define a placement groove (46A) for the artificial tooth (15) in accordance with the three-dimensional data (16A) for the artificial tooth impression (46);
an artificial tooth placing step (S40) involving placing the artificial tooth (15) in the placement groove (46A); and
a denture base material curing step (S50) involving pouring a denture base material into the denture mold (40), with the artificial tooth (15) placed in the placement groove (46A), and curing the denture base material so as to fabricate a one-piece product (13) including the denture mold (40), the artificial tooth (15), and a cured product (21) of the denture base material that are integral with each other.

2. The manufacturing method according to claim 1, wherein
the three-dimensional data preparing step (S10) further involves preparing three-dimensional data (10A) for the plate denture (10), and
the method further comprises a one-piece product machining step (S60) to be performed after the denture base material curing step (S50), the one-piece product machining step (S60) involving directly or indirectly attaching the one-piece product (13) to the cutting apparatus (60) through the retained portion (51, 52), and machining at least the cured product (21) in accordance with the three-dimensional data (10A) for the plate denture (10).

3. The manufacturing method according to claim 1 or 2, wherein,
the denture mold preparing step (S20) involves preparing the denture mold (40) including a forming space (48) which is surrounded by the machinable surface (45) and a side wall (41, 42, 43, 44) extending upward from the machinable surface (45) and into which the denture base material is to be poured, and
the denture base material curing step (S50) involves pouring the denture base material into the forming space (48) and curing the denture base material.

4. The manufacturing method according to claim 3, wherein
the denture mold preparing step (S20) involves preparing the denture mold (40) including the side wall (41, 42, 43, 44) whose height is greater than a maximum thickness of the denture base (20), and
the denture base material curing step (S50) involves fabricating the one-piece product (13) by curing the denture base material once.

5. The manufacturing method according to any one of claims 1 to 4, wherein
the artificial tooth placing step (S40) involves fitting a crown portion of the artificial tooth (15) into the placement groove (46A) using no adhesive.

6. The manufacturing method according to any one of claims 1 to 5, wherein
the denture mold preparing step (S20) involves preparing the denture mold (40) including the machinable surface (45) made of resin, and
the denture base material curing step (S50) involves using, as the denture base material, polymerizable resin containing resin similar in type to the resin that forms the machinable surface (45).

7. The manufacturing method according to claim 6, wherein
the machinable surface (45) of the denture mold (40) is made of acrylic resin, and
acrylic resin is used as the denture base material.

8. The manufacturing method according to any one of claims 1 to 7, wherein
the denture mold preparing step (S20) involves preparing the denture mold (40) including the retained portion (51, 52) provided with a protrusion (51X, 52X), and
the denture mold cutting step (S30) involves preparing an adapter (30) including a fitting groove (32X, 32Y) into which the protrusion (51X, 52X) is to be fitted, and fitting the protrusion (51X, 52X) of the retained portion (51, 52) into the fitting groove (32X, 32Y) of the adapter (30) so as to attach the denture mold (40) to the adapter (30) such that the denture mold (40) is indirectly attached to the cutting apparatus (60) through the adapter (30).

9. The manufacturing method according to claim 8, wherein
the retained portion (51, 52) includes a first retained portion (51) and a second retained portion (52),
the protrusion (51X, 52X) includes a first protrusion (51X), a second protrusion (51X), and a third protrusion (52X),
the denture mold preparing step (S20) involves preparing the denture mold (40) including
the first retained portion (51) provided with the first and second protrusions (51X), and
the second retained portion (52) provided with the third protrusion (52X), the second retained portion (52) being disposed opposite to the first retained portion (51),
the fitting groove (32X, 32Y) includes three or more fitting grooves (32X, 32Y), and
the denture mold cutting step (step S30) involves preparing the adapter (30) including the three or more fitting grooves (32X, 32Y) into which the first protrusion (51X), the second protrusion (51X), and the third protrusion (52X) are to be fitted.

10. A combination of a denture mold (40), a denture base material and an artificial tooth (15), for use in manufacture of a plate denture (10) including a denture base (20) and the artificial tooth (15) placed on the denture base (20), the denture mold (40) comprising:
a retained portion (51, 52) to be directly or indirectly attached to a cutting apparatus (60);
a machinable surface (45) that has been cut by the cutting apparatus (60) such that a placement groove (46A) into which the artificial tooth (15) is to be fitted is defined; and
a forming space (48) which is formed by the machinable surface (45) and a side wall (41, 42, 43, 44) extending upward from the machinable surface (45) and into which the denture base material is poured.

11. The combination according to claim 10, wherein
the machinable surface (45) of the denture mold (40) is made of acrylic resin, and
the denture base material to be poured into the forming space (48) is acrylic resin.

12. The combination according to claim 10 or 11,
the side wall (41, 42, 43, 44) has a height greater than a maximum thickness of the denture base (20).

13. A kit for manufacture of a plate denture (10), the kit comprising:
the combination according to any one of claims 10 to 12; and
an adapter (30) to which the denture mold (40) is to be attached and which is to be retained by a cutting apparatus (60).

14. The kit according to claim 13, wherein
the denture mold (40) includes a protrusion on the retained portion (51, 52),
the adapter (30) includes a fitting groove (32X, 32Y) into which the protrusion is to be fitted, and
the protrusion of the retained portion (51, 52) is fitted into the fitting groove (32X, 32Y) of the adapter (30) such that the denture mold (40) is attachable to the adapter (30).

15. The kit according to claim 14, wherein
the retained portion (51, 52) includes a first retained portion (51) and a second retained portion (52),
the protrusion includes a first protrusion (51X), a second protrusion (51X), and a third protrusion (52X),
the denture mold (40) includes
the first retained portion (51) provided with the first and second protrusions (51X), and
the second retained portion (52) provided with the third protrusion (52X), the second retained portion (52) being disposed opposite to the first retained portion (51),
the fitting groove (32X, 32Y) includes three or more fitting grooves (32X, 32Y), and
the adapter (30) includes the three or more fitting grooves (32X, 32Y) into which the first protrusion (51X), the second protrusion (51X), and the third protrusion (52X) are to be fitted.

## Patentansprüche

1. Ein Verfahren zur Herstellung einer Plattenzahnprothese (10) mit einer Prothesenbasis (20) und einem künstlichen Zahn (15), der auf der Prothesenbasis (20) angeordnet ist, wobei das Verfahren Folgendes umfasst:
einen Schritt zur Vorbereitung dreidimensionaler Daten (S10), der die Vorbereitung dreidimensionaler Daten (16A) für einen künstlichen Zahnabdruck (46) umfasst, der ein Abdruck für den künstlichen Zahn (15) ist, der auf der Prothesenbasis (20) platziert werden soll;
einen Prothesenformvorbereitungsschritt (S20), der das Vorbereiten einer Prothesenform (40) umfasst, die umfasst
einen zurückgehaltenen Abschnitt (51, 52), der direkt oder indirekt an einer Schneidvorrichtung (60) angebracht werden soll, und
eine bearbeitbare Oberfläche (45), die durch die Schneidvorrichtung (60) zu schneiden ist;
einen Prothesenform-Schneideschritt (S30), der das direkte oder indirekte Anbringen der Prothesenform (40) an der Schneidvorrichtung (60) durch den zurückgehaltenen Abschnitt (51, 52) und das Schneiden der bearbeitbaren Oberfläche (45) der Prothesenform (40) beinhaltet, um eine Einsetznut (46A) für den künstlichen Zahn (15) in Übereinstimmung mit den dreidimensionalen Daten (16A) für den künstlichen Zahnabdruck (46) zu definieren;
einen Schritt des Platzierens des künstlichen Zahns (S40), der das Platzieren des künstlichen Zahns (15) in der Einsetznut (46A) beinhaltet; und
einen Schritt zum Aushärten eines Prothesenbasismaterials (S50), der das Gießen eines Prothesenbasismaterials in die Prothesenform (40) umfasst, wobei der künstliche Zahn (15) in der Einsetznut (46A) platziert wird, und das Aushärten des Prothesenbasismaterials, um ein einteiliges Produkt (13) herzustellen, das die Prothesenform (40), den künstlichen Zahn (15) und ein ausgehärtetes Produkt (21) des Prothesenbasismaterials umfasst, die miteinander einstückig sind.

2. Das Herstellungsverfahren gemäß Anspruch 1, wobei
der Schritt der Vorbereitung dreidimensionaler Daten (S10) ferner die Vorbereitung dreidimensionaler Daten (10A) für die Plattenzahnprothese (10) umfasst, und
das Verfahren ferner einen Schritt zur Bearbeitung des einteiligen Produkts (S60) umfasst, der nach dem Schritt zum Aushärten des Prothesenbasismaterials (S50) durchzuführen ist, wobei der Schritt zur Bearbeitung des einteiligen Produkts (S60) das direkte oder indirekte Anbringen des einteiligen Produkts (13) an der Schneidvorrichtung (60) durch den zurückgehaltenen Abschnitt (51, 52) und die Bearbeitung mindestens des ausgehärteten Produkts (21) in Übereinstimmung mit den dreidimensionalen Daten (10A) für die Plattenzahnprothese (10) umfasst.

3. Das Herstellungsverfahren gemäß Anspruch 1 oder 2, wobei,
der Prothesenformvorbereitungsschritt (S20) das Vorbereiten der Prothesenform (40) umfasst, die einen Formungsraum (48) umfasst, der von der bearbeitbaren Oberfläche (45) und einer Seitenwand (41, 42, 43, 44) umgeben ist, die sich von der bearbeitbaren Oberfläche (45) nach oben erstreckt und in die das Prothesenbasismaterial gegossen werden soll, und
der Schritt zum Aushärten eines Prothesenbasismaterials (S50) das Gießen des Prothesenbasismaterials in den Formraum (48) und das Aushärten des Prothesenbasismaterials umfasst.

4. Das Herstellungsverfahren gemäß Anspruch 3, wobei
der Prothesenformvorbereitungsschritt (S20) das Vorbereiten der Prothesenform (40) einschließlich der Seitenwand (41, 42, 43, 44) umfasst, deren Höhe größer ist als eine maximale Dicke der Prothesenbasis (20), und
der Schritt des Aushärtens des Prothesenbasismaterials (S50) das Herstellen des einteiligen Produkts (13) durch einmaliges Aushärten des Prothesenbasismaterials umfasst.

5. Das Herstellungsverfahren gemäß einem der Ansprüche 1 bis 4, wobei
der Schritt des Einsetzens des künstlichen Zahns (S40) das Einsetzen eines Kronenabschnitts des künstlichen Zahns (15) in die Einsetznut (46A) ohne Klebstoff beinhaltet.

6. Das Herstellungsverfahren gemäß einem der Ansprüche 1 bis 5, wobei
der Prothesenformvorbereitungsschritt (S20) die Vorbereitung der Prothesenform (40) einschließlich der bearbeitbaren Oberfläche (45) aus Harz beinhaltet, und
der Schritt des Aushärtens des Prothesenbasismaterials (S50) die Verwendung eines polymerisierbaren Harzes als Prothesenbasismaterial beinhaltet, das ein Harz enthält, das vom Typ her dem Harz ähnlich ist, das die bearbeitbare Oberfläche (45) bildet.

7. Das Herstellungsverfahren gemäß Anspruch 6, wobei
die bearbeitbare Oberfläche (45) der Prothesenform (40) aus Acrylharz hergestellt ist, und
Acrylharz als Prothesenbasismaterial verwendet wird.

8. Das Herstellungsverfahren gemäß einem der Ansprüche 1 bis 7, wobei
der Prothesenformvorbereitungsschritt (S20) beinhaltet die Vorbereitung der Prothesenform (40), die den mit einem Vorsprung (51X, 52X) versehenen zurückgehaltenen Abschnitt (51, 52) enthält, und
der Prothesenform-Schneideschritt (S30) das Vorbereiten eines Adapters (30) mit einer Einpassnut (32X, 32Y), in die der Vorsprung (51X, 52X) eingepasst werden soll, und das Einpassen des Vorsprungs (51X, 52X) des zurückgehaltenen Abschnitts (51, 52) in die Einpassnut (32X, 32Y) des Adapters (30), um die Prothesenform (40) an dem Adapter (30) zu befestigen, so dass die Prothesenform (40) indirekt durch den Adapter (30) an der Schneidvorrichtung (60) befestigt ist.

9. Das Herstellungsverfahren gemäß Anspruch 8, wobei
der zurückgehaltene Abschnitt (51, 52) einen ersten zurückgehaltenen Abschnitt (51) und einen zweiten zurückgehaltenen Abschnitt (52) umfasst,
der Vorsprung (51X, 52X) einen ersten Vorsprung (51X), einen zweiten Vorsprung (51X) und einen dritten Vorsprung (52X) aufweist,
der Prothesenformvorbereitungsschritt (S20) beinhaltet das Herstellen der Prothesenform (40) einschließlich
den ersten zurückgehaltenen Abschnitt (51), der mit dem ersten und zweiten Vorsprung (51X) versehen ist, und
den zurückgehaltenen Abschnitt (52), der mit dem dritten Vorsprung (52X) versehen ist, wobei der zweite Halteabschnitt (52) gegenüber dem ersten Halteabschnitt (51) angeordnet ist,
die Einpassnut (32X, 32Y) drei oder mehr Einpassnuten (32X, 32Y) umfasst, und
der Prothesenform-Schneideschritt (S30) das Vorbereiten des Adapters (30) einschließlich der drei oder mehr Einpassnuten (32X, 32Y) umfasst, in die der erste Vorsprung (51X), der zweite Vorsprung (51X) und der dritte Vorsprung (52X) eingepasst werden sollen.

10. Eine Kombination aus einer Prothesenform (40), einem Prothesenbasismaterial und einem künstlichen Zahn (15) zur Verwendung bei der Herstellung einer plattenförmigen Plattenzahnprothese (10), die eine Prothesenbasis (20) und den auf der Prothesenbasis (20) angeordneten künstlichen Zahn (15) enthält, wobei die Prothesenform (40) umfasst:
einen zurückgehaltenen Abschnitt (51, 52), der direkt oder indirekt an einer Schneidvorrichtung (60) angebracht werden kann
eine maschinell bearbeitbare Oberfläche (45), die von der Schneidevorrichtung (60) so geschnitten wurde, dass eine Einpassnut (46A) definiert wird, in die der künstliche Zahn (15) eingesetzt werden soll; und
einen Formungsraum (48), der durch die bearbeitbare Oberfläche (45) und eine Seitenwand (41, 42, 43, 44) gebildet wird, die sich von der bearbeitbaren Oberfläche (45) nach oben erstreckt und in die das Prothesenbasismaterial gegossen wird.

11. Die Kombination gemäß Anspruch 10, wobei
die bearbeitbare Oberfläche (45) der Prothesenform (40) aus Acrylharz besteht, und
das in den Formraum (48) zu gießende Prothesenbasismaterial aus Acrylharz besteht.

12. Die Kombination gemäß Anspruch 10 oder 11, wobei
die Seitenwand (41, 42, 43, 44) eine Höhe aufweist, die größer ist als eine maximale Dicke der Prothesenbasis (20).

13. Ein Bausatz zur Herstellung einer Plattenzahnprothese (10), wobei der Bausatz umfasst:
die Kombination gemäß einem der Ansprüche 10 bis 12; und
einen Adapter (30), an dem die Prothesenform (40) zu befestigen ist und der von einer Schneidevorrichtung (60) zu halten ist.

14. Der Bausatz gemäß Anspruch 13, wobei
die Prothesenform (40) einen Vorsprung an dem zurückgehaltenen Abschnitt (51, 52) aufweist,
der Adapter (30) eine Einpassnut (32X, 32Y) aufweist, in die der Vorsprung eingepasst werden soll, und
der Vorsprung des zurückgehaltenen Abschnitts (51, 52) in die Einpassnut (32X, 32Y) des Adapters (30) eingepasst wird, so dass die Prothesenform (40) an dem Adapter (30) befestigt werden kann.

15. Der Bausatz gemäß Anspruch 14, wobei
der zurückgehaltene Abschnitt (51, 52) einen ersten zurückgehaltenen Abschnitt (51) und einen zweiten zurückgehaltene Abschnitt (52) umfasst,
der Vorsprung einen ersten Vorsprung (51X), einen zweiten Vorsprung (51X) und einen dritten Vorsprung (52X) aufweist,
die Prothesenform (40) umfasst
den ersten zurückgehaltenen Abschnitt (51), der mit dem ersten und zweiten Vorsprung (51X) versehen ist, und
den zurückgehaltenen Abschnitt (52), der mit dem dritten Vorsprung (52X) versehen ist, wobei der zweite Halteabschnitt (52) gegenüber dem ersten zurückgehaltenen Abschnitt (51) angeordnet ist,
die Einpassnut (32X, 32Y) drei oder mehr Einpassnuten (32X, 32Y) aufweist, und
der Adapter (30) die drei oder mehr Einpassnuten (32X, 32Y) enthält, in die der erste Vorsprung (51X), der zweite Vorsprung (51X) und der dritte Vorsprung (52X) eingepasst werden sollen.

## Revendications

1. Procédé de fabrication d'un appareil dentaire (10) comprenant une base de prothèse (20) et une dent artificielle (15) placée sur la base de l'appareil (20), comprenant :
une étape de préparation des données tridimensionnelles (S10) consistant à préparer les données tridimensionnelles (16A) pour une empreinte de dent artificielle (46) qui est une empreinte de la dent artificielle (15) à placer sur la base de l'appareil (20) ;
une étape de préparation du moule de l'appareil (S20) consistant à préparer un moule de l'appareil (40) comprenant
une partie retenue (51,52) destinée à être fixée directement ou indirectement à un appareil de coupe (60), et
une surface usinable (45) devant être découpée par l'appareil de découpe(60) ;
une étape de découpe du moule de l'appareil (S30) consistant à fixer directement ou indirectement le moule de l'appareil (40) à l'appareil de découpe (60) par la partie retenue (51, 52), et à découper la surface usinable (45) du moule de l'appareil (40) de manière à définir une rainure de placement (46A) pour la dent artificielle (15) conformément aux données tridimensionnelles (16A) pour l'empreinte de la dent artificielle (46) ;
une étape de placement de la dent artificielle (S40) consistant à placer la dent artificielle (15) dans la rainure de placement (46A) ; et
une étape de durcissement du matériau de base de l'appareil (S50) consistant à verser un matériau de base de l'appareil dans le moule de l'appareil (40), la dent artificielle (15) étant placée dans la rainure de placement (46A), et à durcir le matériau de base de l'appareil de manière à fabriquer un produit en une seule pièce (13) comprenant le moule de l'appareil (40), la dent artificielle (15) et un produit durci (21) du matériau de base de l'appareil qui sont solidaires l'un de l'autre.

2. Procédé de fabrication selon la revendication 1, dans lequel
l'étape de préparation des données tridimensionnelles (S10) consiste en outre à préparer des données tridimensionnelles (10A) pour l'appareil de plaque (10), et
le procédé comprend en outre une étape d'usinage d'une pièce (S60) à réaliser après l'étape de durcissement du matériau de base de l'appareil (S50), l'étape d'usinage d'une pièce (S60) consistant à fixer directement ou indirectement le produit d'une pièce (13) à l'appareil de coupe (60) par la partie retenue (51, 52), et à usiner au moins le produit durci (21) conformément aux données tridimensionnelles (10A) pour l'appareil à plaque (10).

3. Procédé de fabrication selon les revendications 1 ou 2, dans lequel,
l'étape de préparation du moule de l'appareil (S20) consiste à préparer le moule de l'appareil (40) comprenant un espace de formation (48) entouré par la surface usinable (45) et une paroi latérale (41, 42, 43, 44) s'étendant vers le haut à partir de la surface usinable (45) et dans laquelle le matériau de base de l'appareil doit être versé, et
l'étape de durcissement du matériau de base de l'appareil (S50) consiste à verser le matériau de base de l'appareil dans l'espace de formation (48) et à durcir le matériau de base de l'appareil.

4. Procédé de fabrication selon la revendication 3, dans lequel
l'étape de préparation du moule de l'appareil (S20) consiste à préparer le moule de l'appareil (40) comprenant la paroi latérale (41, 42, 43, 44) dont la hauteur est supérieure à une épaisseur maximale de la base de prothèse (20), et
l'étape de polymérisation du matériau de base de l'appareil (S50) consiste à fabriquer le produit en une seule pièce (13) en polymérisant une fois le matériau de base de l'appareil.

5. Procédé de fabrication selon l'une des revendications 1 à 4, dans lequel
l'étape de mise en place de la dent artificielle (S40) consiste à placer une partie de la couronne de la dent artificielle (15) dans la rainure de mise en place (46A) sans utiliser d'adhésif.

6. Procédé de fabrication selon l'une des revendications 1 à 5, dans lequel
l'étape de préparation du moule de l'appareil (S20) consiste à préparer le moule de l'appareil (40) comprenant la surface usinable (45) en résine, et
l'étape de polymérisation du matériau de base de l'appareil (S50) consiste à utiliser, comme matériau de base de l'appareil, une résine polymérisable contenant une résine de type similaire à la résine qui forme la surface usinable (45).

7. Procédé de fabrication selon la revendication 6, dans lequel
la surface usinable (45) du moule de l'appareil (40) est en résine acrylique, et
la résine acrylique est utilisée comme matériau de base de l'appareil.

8. Procédé de fabrication selon l'une des revendications 1 à 7, dans lequel
l'étape de préparation du moule de l'appareil (S20) consiste à préparer le moule de l'appareil (40) comprenant la partie retenue (51, 52) pourvue d'une protubérance (51X, 52X), et
l'étape de découpe du moule de l'appareil (S30) consiste à préparer un adaptateur (30) comprenant une rainure d'ajustement (32X, 32Y) dans laquelle la protubérance (51X, 52X) doit être ajustée, et à ajuster la protubérance (51X, 52X) de la partie retenue (51, 52) dans la rainure d'ajustement (32X, 32Y) de l'adaptateur (30) afin de fixer le moule de l'appareil (40) à l'adaptateur (30) de sorte que le moule de l'appareil (40) soit indirectement fixé à l'appareil de coupe (60) par l'intermédiaire de l'adaptateur (30).

9. Procédé de fabrication selon la revendication 8, dans lequel
la partie retenue (51, 52) comprend une première partie retenue (51) et une deuxième partie retenue (52),
la protubérance (51X, 52X) comprend une première protubérance (51X), une deuxième protubérance (51X) et une troisième protubérance (52X),
l'étape de préparation du moule de l'appareil (S20) consiste à préparer le moule de l'appareil (40), y compris
la première partie retenue (51) pourvue des première et deuxième protubérances (51X), et
la deuxième partie retenue (52) pourvue de la troisième protubérance (52X), la deuxième partie retenue (52) étant disposée à l'opposé de la première partie retenue (51),
la rainure d'ajustement (32X, 32Y) comprend trois rainures d'ajustement ou plus (32X, 32Y), et
l'étape de découpe du moule de l'appareil (étape S30) consiste à préparer l'adaptateur (30) comprenant les trois rainures d'ajustement ou plus (32X, 32Y) dans lesquelles la première protubérance (51X), la deuxième protubérance (51X) et la troisième protubérance (52X) doivent être montées.

10. Combinaison d'un moule de l'appareil (40), d'un matériau de base de prothèse et d'une dent artificielle (15), pour la fabrication d'un appareil dentaire (10) comprenant une base de prothèse (20) et la dent artificielle (15) placée sur la base de prothèse (20), le moule de l'appareil (40) comprenant :
une partie retenue (51, 52) destinée à être fixée directement ou indirectement à un appareil de coupe (60) ;
une surface usinable (45) qui a été découpée par l'appareil de découpe (60) de manière à définir une rainure de placement (46A) dans laquelle la dent artificielle (15) doit être montée ; et
un espace de formation (48) formé par la surface usinable (45) et une paroi latérale (41, 42, 43, 44) s'étendant vers le haut à partir de la surface usinable (45) et dans laquelle le matériau de base de l'appareil est versé.

11. Combinaison selon la revendication 10, dans laquelle
la surface usinable (45) du moule de l'appareil (40) est en résine acrylique, et
le matériau de base de l'appareil à verser dans l'espace de formation (48) est une résine acrylique.

12. Combinaison selon les revendications 10 ou 11,
la paroi latérale (41, 42, 43, 44) a une hauteur supérieure à l'épaisseur maximale de la base de l'appareil (20).

13. Kit pour la fabrication d'une prothèse de plaque (10), le kit comprenant :
la combinaison selon l'une quelconque des revendications 10 à 12 ; et
un adaptateur (30) auquel le moule de l'appareil (40) doit être fixé et qui doit être retenu par un appareil de coupe (60).

14. Kit selon la revendication 13, dans lequel
le moule de l'appareil (40) comprend une saillie sur la partie retenue (51, 52),
l'adaptateur (30) comprend une rainure de montage (32X, 32Y) dans laquelle la protubérance doit être montée, et
la protubérance de la partie retenue (51, 52) est ajustée dans la rainure d'ajustement (32X, 32Y) de l'adaptateur (30) de sorte que le moule de l'appareil (40) puisse être fixé à l'adaptateur (30).

15. Kit selon la revendication 14, dans lequel
la partie retenue (51, 52) comprend une première partie retenue (51) et une deuxième partie retenue (52),
la protubérance comprend une première protubérance (51X), une deuxième protubérance (51X) et une troisième protubérance (52X),
le moule pour appareil dentaire (40) comprend
la première partie retenue (51) pourvue des première et deuxième protubérances (51X), et
la deuxième partie retenue (52) pourvue de la troisième protubérance (52X), la deuxième partie retenue (52) étant disposée à l'opposé de la première partie retenue (51),
la rainure d'ajustement (32X, 32Y) comprend trois rainures d'ajustement ou plus (32X, 32Y), et
l'adaptateur (30) comprend au moins trois rainures de montage (32X, 32Y) dans lesquelles la première protubérance (51X), la deuxième protubérance (51X) et la troisième protubérance (52X) doivent être montées.
